# EUROPEAN PATENT SPECIFICATION

(11) **EP 4 439 131 B1**
(45) Date of publication and mention of the grant of the patent: **14.10.2026**
(21) Application number: 23305471.7
(22) Date of filing: 31.03.2023
(51) Int. Cl.: G01M 11/02, G02B 1/11, G02C 7/02, B29D 11/00

(54) **TRANSMISSION OPTICAL SYSTEM OF DETERMINED RESIDUAL REFLECTION COLOR, SYSTEM FOR MANUFACTURING THEREOF AND APPARATUS FOR EVALUATING A DIFFERENCE IN RESIDUAL REFLECTION COLOR**
OPTISCHES ÜBERTRAGUNGSSYSTEM MIT BESTIMMTER RESTREFLEXIONSFARBE, SYSTEM ZU DESSEN HERSTELLUNG UND VORRICHTUNG ZUR BEWERTUNG EINER RESTREFLEXIONSFARBEDIFFERENZ
SYSTÈME OPTIQUE DE TRANSMISSION À COULEUR RÉSIDUELLE DÉTERMINÉE DE RÉFLEXION, SYSTÈME POUR SA FABRICATION ET APPAREIL POUR ÉVALUER UNE DIFFÉRENCE DE COULEUR RÉSIDUELLE DE RÉFLEXION

(43) Date of publication of application: 02.10.2024
(73) Proprietor: ESSILOR INTERNATIONAL, 94220 Charenton-Le-Pont (FR)
(72) Inventor: REDON, Justine, 94600 CHOISY-LE-ROI (FR); MAURY, Hélène, 75011 Paris (FR)
(74) Representative: Jacobacci & Partners France

(56) References cited:
- JP-A- 2000 284 234
- US-A1- 2008 084 535
- US-B2- 10 782 527

## Description

The invention relates to an antireflection transmission optical system designed and/or identified to have a determined perceived color in reflection.

The invention also relates to an apparatus for evaluating a difference in perceived colors in reflection between two antireflection transmission optical systems, for example in a pair of spectacle lenses.

The invention also relates to a system or apparatus for manufacturing antireflection transmission optical systems having a predetermined and repeatable perceived color in reflection.

### BACKGROUND INFORMATION AND PRIOR ART

It is known to apply an antireflection (AR) coating to an ophthalmic lens so as to reduce the mean reflection factor. In this way, the eyes of the lens wearer are more visible for an observer and the wear comfort is improved for the wearer. The antireflection coating is generally applied on the front face of the lens.

However, an antireflection coating most often has a residual reflection color. This residual reflection color is perceived by a person who is facing the lens wearer and receives residual light reflected on the antireflection coating.

The residual reflection color may be for example green, blue, yellow (gold), orange, or purple or any other combination of them. Recently, exploration of new colorimetric windows for AR coatings has emerged.

A transmission optical system, such as an ophthalmic lens, provided with an antireflection coating commercially available under a given trademark has its own specific residual reflection color. The variability of the perceived color from one lens to another lens may be problematic for example in a pair of spectacles, wherein two separate lenses are placed next to each other. The manufacturer must ensure the reproducibility of this residual reflection color so that the perceived color is substantially the same from one lens to the other so as to enable lens color pairing, that is to say that two lenses resulting from the same industrial process cannot be discriminated between each other and their residual reflection colors are considered by an observer as being identical.

Over the last few years, lens reflected color pairing was based on color experts feedbacks and was therefore dependent from the specific perception of the chosen color expert, and moreover once the lenses were manufactured, which involves the disposal of the non-pairable lenses as wastes, which is not satisfying compared to a sustainable approach.

US 2008/084535 A1 discloses a collection of ophthalmic lens pairs that share the same perceived residual color but feature different color intensities. By specifically controlling the mean reflection factor and chroma value, the an observer is allowed to distinguish between high-intensity and low-intensity versions of the same hue, such as blue, yellow, or pink, while maintaining effective antireflection properties. The document also covers individual tinted lenses with varying reflection intensities on the front and rear faces and display packs designed to showcase these visual differences.

Thus, there is a need for a system or apparatus able to predict the perceived color of an antireflection ophthalmic lens. There is also a need for a system or apparatus to evaluate a difference in perceived colors between two antireflection ophthalmic lenses or an apparatus for lens color pairing. There is also a need for a system for designing an antireflection ophthalmic lens having a predetermined perceived color that is repeatable in production line.

### SUMMARY OF THE INVENTION

Therefore one object of the invention is to provide a transmission optical system comprising an optical base element having a first face adapted to receive incident optical lights and a second face through which transmitted optical lights exit, the transmission optical system comprising an interferential coating on the first face providing the transmission optical system with a mean visible light reflection factor Rv that is less than or equal to 2.5 %, said transmission optical system presenting by reflection on said first face a residual reflection color, wherein the transmission optical system comprises a residual color identifier for determining said residual reflection color, the residual color identifier being based in part on colorimetric coordinates of the transmission optical system in CIELab color space and in part on colorimetric coordinates of the transmission optical system in CIELUV color space.

According to a particular aspect of the present disclosure, the residual color identifier is based on colorimetric coordinates L*, a* and b* from the CIELab color space and on at least one of a chroma value C*uv , a saturation value S*uv and a pair of colorimetric coordinates u* and v*, from the CIELUV color space.

A further object of the invention is to provide an apparatus for evaluating a difference in residual reflection color between a first transmission optical system and a second transmission optical system, wherein each of the first and second transmission optical system comprises an optical base element having a first face adapted to receive incident optical lights and a second face through which transmitted optical lights exit, each of the first and second transmission optical system comprising an interferential coating on the first face providing the first, and respectively second, transmission optical system with a mean visible light reflection factor Rv that is less than or equal to 2.5 %, each of the first and second transmission optical system presenting by reflection on said first face a residual reflection color, said apparatus comprising:
- an identification system adapted to read or determine a residual color identifier of the first transmission optical system, and respectively, of the second transmission optical system; the residual color identifier of the first transmission optical system being based in part on colorimetric coordinates of the first transmission optical system in CIELab color space and in part on colorimetric coordinates of the first transmission optical system in CIELUV color space and the residual color identifier of the second transmission optical system being based in part on colorimetric coordinates of the second transmission optical system in CIELab color space and in part on colorimetric coordinates of the second transmission optical system in CIELUV color space;
- a pairing unit adapted to determine a difference in residual reflection color between the first and second transmission optical systems, said difference in residual reflection color being based on a comparison between the residual color identifier of the first transmission optical system and the residual color identifier of the second transmission optical system.

According to a particular aspect, the pairing unit is adapted to determine if the difference in residual reflection color is comprised within a predetermined multi-dimension pairing range.

Advantageously, said difference in residual reflection color comprises a set of parameters comprising a hue deviation parameter ΔH* derived from the colorimetric coordinates a* and b* in CIELab color space and shades of hue parameters comprising a lightness difference ΔL* from the colorimetric coordinates in CIELab color space and a saturation difference ΔS* from the colorimetric coordinates in CIELUV color space.

According to another advantageous and particular aspect, the pairing unit is adapted to determine if the hue deviation parameter ΔH* is comprised in a predetermined pairing range of hue deviation (ΔH*ₘᵢₙ, ΔH*ₘₐₓ), and wherein the pairing unit is adapted to determine if the lightness difference ΔL* and the saturation difference ΔS* are comprised in a predetermined two-dimension pairing range of lightness difference and saturation difference.

Preferably, the predetermined pairing range of hue deviation (ΔH*ₘᵢₙ, ΔH*ₘₐₓ) depends on the value of hue angle, and wherein the predetermined two-dimension pairing range of lightness difference and saturation difference depends on the value of hue angle.

According to a further aspect of the present disclosure, the hue deviation parameter ΔH* of the first transmission optical system compared to the second transmission optical system is equal to $Δ {H}^{∗} = \frac{Δ h}{\left|Δh\right|} Δ {H}_{ab}$ wherein Δ*h = h*₁ *- h*₂ is a difference between a hue angle h1 of the first transmission optical system and a hue angle h2 of the second transmission optical system and $Δ {H}_{ab} = \sqrt{{\left({a}_{1}-{a}_{2}\right)}^{2} + {\left({b}_{1}-{b}_{2}\right)}^{2} - {\left({C}_{1}-{C}_{2}\right)}^{2}}$ wherein a₁, b₁ are the colorimetric coordinates and *C₁* the chroma ${C}_{1} = \sqrt{\left({{a}_{1}}^{2}+{{b}_{1}}^{2}\right)}$ of the first transmission optical system in the CIELab color space and, respectively a₂, b₂ are the colorimetric coordinates and *C₂* the chroma ${C}_{2} = \sqrt{\left({{a}_{2}}^{2}+{{b}_{2}}^{2}\right)}$ of the second transmission optical system in the CIELab color space.

In an exemplary embodiment, the multi-dimension pairing range is determined by machine learning involving as input data visual examination of a collection of transmission optical systems to be compared to a reference optical system having a target residual reflection color and as output data a validation or an invalidation of a pairing of the reference optical system with any one of the transmission optical systems of the collection.

Advantageously, the apparatus comprises a database of residual color identifiers of transmission optical systems, and the apparatus is adapted to select in said database a pair of two optical transmission systems having a difference in residual reflection color wherein the hue deviation parameter ΔH* is comprised in a predetermined pairing range of hue deviation (ΔH*ₘᵢₙ, ΔH*ₘₐₓ) and wherein the lightness difference ΔL* and the saturation difference ΔS* are comprised in a predetermined two-dimension pairing range of lightness difference and saturation difference.

According to another aspect, the apparatus comprises a sorting module adapted to classify pairs of two optical transmission systems in determined pairing ranges as a function of the value of hue angle and/or as a function of the difference in residual reflection color between the two optical transmission systems of each pair.

According to another aspect, the identification system comprises:
i. a removal unit adapted to remove at least partially an area of a protective outer layer formed on the interferential coating and to define a zone of the interferential coating free from said protective outer layer;
ii. a measuring unit adapted to provide a measurement and/or a calculation from the zone of the interferential coating free from said protective outer layer, said measurement and/or calculation comprising colorimetric coordinates L*, a* and b* from CIELab color space and at least one of a chroma value C*uv or a saturation value S*uv , or a pair of colorimetric coordinates u* and v*, from CIELUV color space;
iii. an identification unit adapted to create the residual color identifier from the measurement and/or the calculation implemented by the measuring unit.

A further object of the invention is to provide a system for manufacturing a transmission optical system comprising an optical base element and an interferential coating on at least one face of the base element, the interferential coating providing the transmission optical system with a mean visible light reflection factor Rv that is less than or equal to 2.5 %, said transmission optical system presenting by reflection on said face a predetermined residual reflection color, wherein the system comprises::
- a computer system comprising an optical design software adapted to :
   a) define a theoretical interferential coating comprising a stack of dielectric layers, said theoretical interferential coating having a mean visible light reflection factor Rv that is less than or equal to 2.5 %;
   b) calculate a nominal hue angle in the CIELab color space and a nominal residual color identifier based in part on colorimetric coordinates in CIELab color space and in part on colorimetric coordinates in CIELUV color space of the theoretical interferential coating;
   c) define ranges of manufacturing variations in the stack of dielectric layers so as to form a collection of predictable interferential coatings;
   d) for each predictable interferential coating of the collection, calculate a predictable hue angle in the CIELab color space and a predictable residual color identifier based in part on colorimetric coordinates in CIELab color space and in part on colorimetric coordinates in CIELUV color space;
   e) for each predictable interferential coating of the collection, calculate a difference in residual reflection color between the predictable interferential coating and the theoretical interferential coating based on the predictable residual reflection color identifier of the predictable interferential coating and on the nominal residual color identifier of the theoretical interferential coating;
   f) use a pairing database storing predetermined multi-dimension pairing ranges as a function of predetermined hue angles to validate or invalidate if each predictable interferential coating of the collection presents with the theoretical interferential coating a difference in residual reflection color inside a multi-dimension pairing range associated to the nominal residual color identifier of the theoretical interferential coating, said multi-dimension pairing range comprising a pairing range of a hue deviation parameter associated to the nominal hue angle and a two-dimension pairing range of lightness difference and saturation difference associated to the nominal hue angle and to said nominal residual color identifier;
      - a validation unit adapted to adjust the stack of dielectric layers of the theoretical interferential coating until a predetermined number or percentage of the collection of predictable interferential coatings is within the multi-dimension pairing range associated to the nominal residual color identifier of the theoretical interferential coating;
      - a deposition unit for depositing on an optical base element a stack of dielectric layers according to the theoretical interferential coating.

According to a particular aspect, the system for manufacturing is configured so that at step b) the nominal residual color identifier of the theoretical interferential coating is based on the colorimetric coordinates L*, a* and b* from CIELab color space and at least one of a chroma value C*uv , a saturation value S*uv and a pair of colorimetric coordinates u* and v*, from CIELUV color space; and
at step d) the predictable residual color identifier of each predictable interferential coating is based on the colorimetric coordinates L*, a* and b* from CIELab color space and at least one of a chroma value C*uv or a saturation value S*uv , or a pair of colorimetric coordinates u* and v*, from CIELUV color space; and
at step e) the difference in residual reflection color between each predictable interferential coating and the theoretical interferential coating comprises a hue deviation parameter ΔH* derived from the colorimetric coordinates a* and b* in CIELab color space and shades of hue parameters comprising a lightness difference ΔL* from the colorimetric coordinates in CIELab color space and a saturation difference ΔS* from the colorimetric coordinates in CIELUV color space of each predictable interferential coating and of the theoretical interferential coating.

According to a further aspect, the system for manufacturing is configured so that the hue deviation parameter ΔH* between each predictable interferential coating and the theoretical interferential coating is equal to $Δ {H}^{∗} = \frac{Δ h}{\left|Δh\right|} Δ {H}_{ab}$ wherein Δ*h = h*₁ *- h*₂ is a difference between a hue angle h1 of the predictable interferential coating and a hue angle h2 of the theoretical interferential coating and $Δ {H}_{ab} = \sqrt{{\left({a}_{1}-{a}_{2}\right)}^{2} + {\left({b}_{1}-{b}_{2}\right)}^{2} - {\left({C}_{1}-{C}_{2}\right)}^{2}}$ wherein a₁, b₁ are the colorimetric coordinates and *C₁* the chroma ${C}_{1} = \sqrt{\left({{a}_{1}}^{2}+{{b}_{1}}^{2}\right)}$ of the predictable interferential coating in the CIELab color space, and respectively a₂, b₂ are the colorimetric coordinates and *C₂* the chroma ${C}_{2} = \sqrt{\left({{a}_{2}}^{2}+{{b}_{2}}^{2}\right)}$ of the theoretical interferential coating in the CIELab color space.

### DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 schematically shows a side view of a transmission optical system with incident, transmitted and reflected lights;
- Figure 2 shows two transmission optical systems with antireflection coatings on the convex and on the concave sides, the two transmission optical systems presenting by reflection a different residual reflection color;

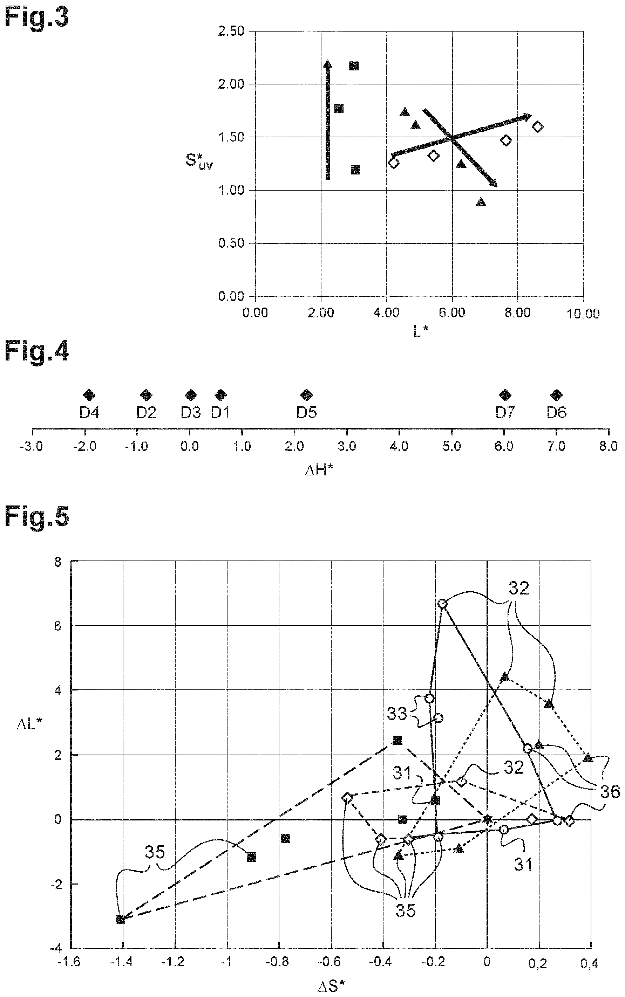

- Figure 3 shows a graph of perceived brightness, lightness and saturation of residual reflection color for a collection of transmission optical systems with antireflection coatings on the convex side presenting by reflection slightly different residual reflection color, as a function of the colorimetric coordinate L* in abscissa axis, and as a function of the saturation value S*ᵤᵥ in ordinate axis; the points represented by squares being relative to lenses appearing more saturated in the direction pointed by the corresponding arrow, the points represented by triangles being relative to lenses appearing lighter in the direction pointed by the corresponding arrow, the points represented by ribbons being relative to lenses appearing brighter in the direction pointed by the corresponding arrow;
- Figure 4 shows a graph of a hue deviation parameter ΔH* for a color palette of various transmission optical systems of the orange AR lens type;
- Figure 5 shows a graph of perceived brightness, lightness and saturation of residual reflection color for different families of AR lenses, as a function of a saturation difference ΔS*, in abscissa axis, and as a function of a lightness difference ΔL*, in ordinate axis;
- Figure 6 shows a graph of a hue deviation parameter ΔH* for various AR green lenses ;
- Figure 7 shows a graph of perceived brightness, lightness and saturation of residual reflection color for various green lenses as a function of a saturation difference ΔS* in abscissa axis and as a function of a lightness difference ΔL* in ordinate axis;
- Figure 8 schematically shows an apparatus for evaluating a difference in residual reflection color between two transmission optical systems;
- Figure 9 schematically shows a system for manufacturing a transmission optical system with an antireflection interferential coating presenting a predetermined residual reflection color.

In the description which follows the drawings are not necessary to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features that are defined relative to a device can be transposed, individually or in combination, to a process.

### Definitions

The mean visible light reflection factor Rᵥ corresponds to the reflection coefficient integrated over the visible spectrum between 380 nm and 780 nm and weighted by the curve of energy sensitivity of the human eye for a CIE observer over the visible spectrum between 380 nm et 780 nm with a daylight illuminant. More precisely, the mean visible light reflection factor Rᵥ is defined by the following equation: ${R}_{v} = \frac{{\int }_{380}^{780} R \left(λ\right) V \left(λ\right) {D}_{65} \left(λ\right) dλ}{{\int }_{380}^{780} V \left(λ\right) {D}_{65} \left(λ\right) dλ}$ where R(λ) is the reflectance at a wavelength λ between 380 nm and 780 nm, V(λ) is the eye sensitivity function for a photopic observer in the color space defined by the CIE (Commission on Illumination, in French "Commission Internationale de I'Eclairage") in 1931 and D65(λ) is the daylight illuminant defined in the CIE S005/E-1998 standard.

### Device

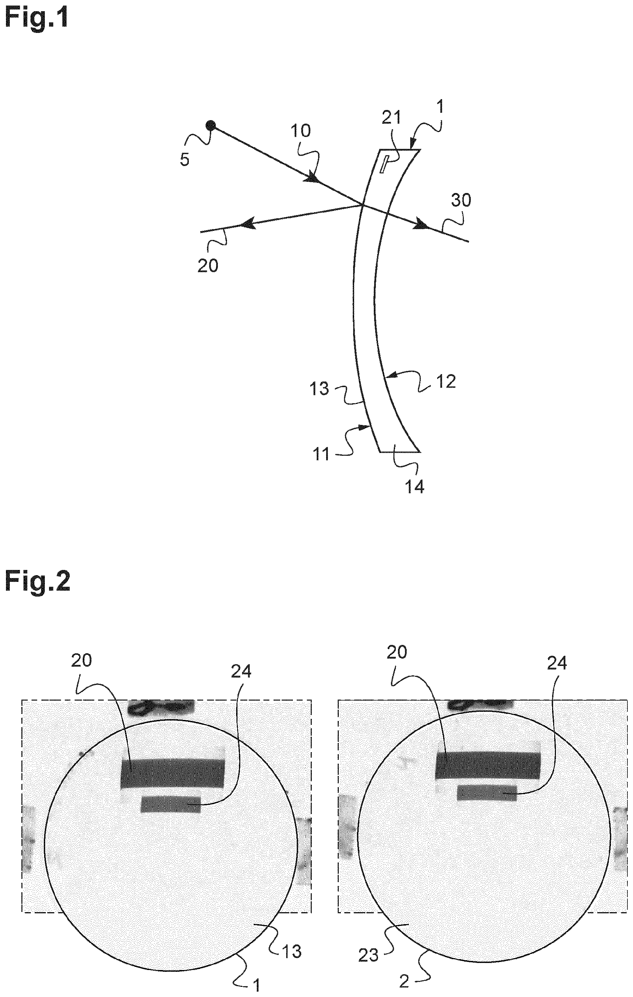

Figure 1 shows an exemplary transmission optical system 1 according to the present disclosure. The transmission optical system 1 comprises an optical base element 14 or substrate.

The optical base element 14 may in particular be an optically transparent material having the shape of the transmission optical system, for example an ophthalmic lens intended to be mounted in a pair of spectacle lenses. In this context, the term "substrate" means the base constituent material of the transmission optical system and more particularly of the ophthalmic lens. This material acts as support for a stack of one or more coatings or layers.

The substrate of the transmission optical system 1 may be shaped as a concavo-convex lens as illustrated on figure 1 wherein the front face 11 is convex and the back face 12 is concave. Alternatively, the front face 11 and/or the back face 12 is/are flat.

The transmission optical system 1 comprises an antireflection coating made of an interferential coating 13 deposited on the front face 11 of the substrate. In the present disclosure, it is to be understood that a layer or a coating deposited on or onto a substrate is intended to mean that the layer or the coating is deposited onto the external surface of the outer coating of the article that is the coating which is the most distant from the substrate. The transmission optical system 1 also comprises a residual color identifier 21 as disclosed in detail below.

In the example illustrated on figure 1, the interferential coating 13 is deposited over the surface area of the front face 11. However, the surface area with the interferential coating 13 is not necessary the whole surface of the front face 11.

The interferential coating 13 comprises a multilayer stack of dielectric layers. The number of layers in the stack is comprised between two and ten and generally between four and six layers. Each layer of the stack and the stack itself has a uniform thickness over the surface area whereon it is deposited.

The interferential coating may be deposited directly onto a bare substrate. It is preferred usually that the main surface of the substrate be coated with one or more functional coatings improving its optical and/or mechanical properties, prior to depositing the antireflection coating. These functional coatings traditionally used in optics may be, without limitation, an impact-resistant primer layer, an abrasion- and/or scratch-resistant coating (hard coat), a polarized coating, an antistatic coating, a photochromic coating, a tinted coating or a stack made of two or more of such coatings.

Figure 1 also shows a light source 5 generating an incident light beam 10 directed onto the transmission optical system 1 and the two main light paths of the light beam. A transmitted light beam 30 is formed when the transmitted light passes through the first face 11, the optical base element 14 and the second face 12 of the lens.

The interferential coating 13 is designed to provide the transmission optical system with a mean visible light reflection factor Rᵥ that is less than or equal to 2.5 %, and preferably less than or equal to 2%. In other words, the interferential coating 13 transmits most of the incident light beam 10. However, the mean visible light reflection factor Rᵥ is not null. The interferential multilayer coating 13 thus reflects a small part of the incoming light beam and forms a reflected light beam 20.

An observer, who is looking at the front face 11 of the transmission optical system, receives the reflected light beam 20. The observer perceives a residual reflection color that depends on the interferential coating 13, in particular on the thickness and composition of the various layers in the multilayer stack. Small variations in the multilayer stack may induce differences in perception of the residual reflection color. Moreover, the perception of residual reflection color may depend on the observer. Thus, in the prior art, it is difficult to precisely predict the residual reflection color of an interferential coating.

Figure 2 shows two transmission optical systems 1, 2. More precisely, in this example, the lenses have negative dioptric power and are observed from an observer point of view (opposed to wearer point of view). Consequently, the upper reflection 20 is the reflected color of the front/convex surface of the lens 1, respectively 2, while the lower and smaller reflection 24 is the reflected color of the opposite back/concave surface of the lens 1, respectively 2. It would be switched for positive dioptric power lenses.

This reflection 20 is obtained with a rectangle-shaped diffuse light source illuminating a lens lying on a black background. The observation angle is about 15 degrees (but not precisely). The image is sharp because the camera focus is on the reflection. On its front face, each transmission optical system 1, respectively 2, has an interferential coating 13, respectively 23, designed to provide the transmission optical system 1, respectively 2, with a mean visible light reflection factor Rᵥ that is less than or equal to 2.5 %. In this example, the reflection 20 of transmission optical system 1 appears to have a green residual reflection color whereas the reflection 20 of the transmission optical system 2 appears to have a yellow-green residual reflection color. Such a difference in residual reflection color may look unsightly when mounting the two transmission optical systems 1, 2 on the same frame for forming a pair of spectacle lenses. This difference in residual reflection color illustrates the difficulty in lens color pairing.

Each transmission optical system 1, respectively 2, comprises a residual color identifier 21, respectively 22. For example, not according to the claimed invention, the residual color identifier 21, 22 consists in a textual identifier provided on the pocket associated to the lens, comprising a combination of alphanumerical characters and/or in a safety identity markings like a bar-code or a QR-code. The residual color identifier is for example integrated to the lens itself as an embedded safety identity marking such as a holographic device comprising a holographic recording manufactured by holographic techniques. Alternatively, the residual color identifier is printed on a label placed on the front face of each transmission optical system. Each residual color identifier is associated to a specific set of color coordinates representative of the perceived residual reflection color of the transmission optical system with an AR coating.

More precisely, the visual attributes of a perceived residual reflection color of an AR coating can be sorted out in two main categories : the first category being relative to hue and the second category to the shades of hue. The hue indicates the nature of the color : red, green, blue, yellow... The hue corresponds to the usual meaning of the color. The shades of hue include four other aspects used to qualify a perceived residual reflection color : the saturation indicates the intensity or purity of the color; the brightness indicates if the color is luminous, shining or, at the opposite, matt; the lightness (or "clarté" in French language) indicates the transition from dark to bright white reflection; the fourth aspect is flashy or pale : a flashy color is both saturated and bright, at the opposite, a pale color is both unsaturated and matt. Some color palettes of lenses have been developed and associated respectively to different brightness, different saturation and different lightness for a same hue. These color palettes can be used as a reference for visual comparison of an AR coating.

The present disclosure proposes tools for predicting and quantitatively assessing the residual reflection color of an interferential coating and for evaluating a difference in residual reflection color between a pair of transmission optical systems.

Prior art colorimeters determine the color of objects and surfaces, such as an interferential coating, by measuring a set of three color coordinates (L*, a*, b*) in the CIELab color space. The CIELab color space is defined by the International Commission on Illumination (abbreviated CIE) in 1976, wherein L* represents the perceptual lightness and a* and b* represent the colors perceived by human vision: red, green, blue and yellow. The three color coordinates (L*, a*, b*) can be transformed in polar coordinates L*, C*_{ab} and h°, with the hue angle, or hue h°=(180/π).arctang(b*/a*) and the chroma ${C}_{ab}^{∗} = \sqrt{\left({a}^{2}+{b}^{2}\right)}$. The color coordinates (L*, a*, b*), the hue angle and chroma C*_{ab} are defined in the CIELab 1976 color space, with an observer 10° and D65 illuminant.

The color of a surface is defined by a point having the coordinates (L*, a*, b*) in the CIELab color space, wherein a* measures the red to green shift and b* measures the yellow to blue shift. The hue angle (h) does express the color perception and the chroma C*_{ab} value does express the chromatic purity sensation, that is to say the position on the color scale extending from black to achromatic white, i.e. white without any color tone, up to the saturated monochromatic color, having a totally pure color tone. As used herein, the perceived chromatic color does mean a color that is perceived as possessing a chromatic tone. The chromatic tone, or hue, represents the visual sensation attribute which has resulted in the usual color denominations such as blue, green, yellow, red, purple and so on.

However, the three color coordinates (L*, a*, b*) and the parameters of hue and chroma C*_{ab} derived therefrom do not enable to correctly identify the residual reflection color of an antireflection coating or evaluate the difference in residual reflection color between two antireflection coatings.

According to the present disclosure, the residual reflection color of an antireflection coating is further defined by at least one parameter outside the CIELab color space. More precisely, another color space is used, the CIELUV color space, defined by the International Commission on Illumination (CIE) in 1976, which is dedicated to determining the color of light and light sources, such as electronic screens. The CIELUV color space is defined by another set of three colorimetric coordinates (L*, u*, v*), wherein L* is the lightness and u* and v* represent the colors of a light or light source perceived by human vision. The colorimetric coordinates (L*, u*, v*) in the CIELUV color space can be transformed as follows into a chroma ${C}_{uv}^{*} = \sqrt{\left({u}^{2}+{v}^{2}\right)}$ and a saturation $S * = {S}_{uv}^{*} = \frac{{C}_{uv}^{*}}{L *}$.

It is outlined that the saturation S* in the CIELUV color space has no equivalent in the L*a*b* color space.

The residual reflection color of an antireflection coating is herein determined by a combination of the color coordinates in the CIELab color space and of the color coordinates in the CIELUV color space. More precisely, the visual attributes of a perceived AR color are separated in two groups : the first group consists of the hue that indicates the nature of the color (red, green, blue...) and the second group includes shades of hue that depend on the saturation, brightness and/or lightness.

Preferably, the residual reflection color of an antireflection coating is herein determined by a residual color identifier based on at least four parameters : the colorimetric coordinates L*, a* and b* from the CIELab color space and at least one of a chroma value ${C}_{uv}^{*}$*,* a saturation value ${S}_{uv}^{*}$ and a pair of colorimetric coordinates u* and v*, from the CIELUV color space.

The residual color identifier enables to predict more precisely the residual reflection color of an antireflection coating than the color coordinates based only on the CIELab color space. Contrary to the general knowledge which considers that an antireflection coating behaves only as a surface generating a residual reflection color which can be fully defined by the L*a*b* color coordinates, the residual color identifier as defined herein seems to take into consideration that an antireflection coating generates a residual reflection color both as a surface and as a secondary light source. It derives from the present disclosure that the L*a*b* color coordinates only partly define the residual reflection color of an AR coating, whereas the residual color identifier enables to fully define the residual reflection color of an antireflection coating as perceived by the human eye. The residual color identifier enables to quantify rapidly the evaluation performed by an expert in reflected colors. The residual color identifier enables to warranty the residual reflection color of any manufactured transmission optical system with an AR coating.

A difference in residual reflection color between two optical systems with antireflection coatings can be expressed by a comparison between the residual color identifiers of the two optical systems. This difference in residual reflection color, based on at least four parameters, is useful to predict the acceptability for pairing the two antireflection coatings.

A hue deviation parameter ΔH* is herein defined for evaluating the perception of hue differences between two transmission optical systems with antireflection coatings. The hue deviation parameter ΔH* is based on the color coordinates in the CIELab color space.

A saturation difference ΔS*, expressed only in the CIELUV color space, and a lightness difference ΔL* are used for determining the perception of differences in shades of hue. The lightness difference ΔL* is expressed either in the CIELUV color space or in the CIELab color space.

The difference in residual reflection color comprises for example a set of parameters comprising the hue deviation parameter ΔH* derived from the colorimetric coordinates a* and b* in CIELab color space and shades of hue parameters comprising the lightness difference ΔL* from the colorimetric coordinates in CIELab color space and the saturation difference ΔS* from the colorimetric coordinates in CIELUV color space.

Thus, all the color differences between residual reflection colors of optical systems with antireflection coatings can be expressed using a one-dimension scale of the hue deviation parameter ΔH* and a 2D-mapping of the lightness difference and saturation difference (ΔL* , ΔS*).

Let us consider a first transmission optical system 1 having an antireflection coating 13 and second transmission optical system 2 having another antireflection coating 23. The colorimetric coordinates a*, b* and the chroma ${C}_{ab}^{*}$ of the first transmission optical system in the CIELab color space are denoted a₁, b₁ and C₁. The colorimetric coordinates a*, b* and the chroma ${C}_{ab}^{*}$ of the second transmission optical system in the CIELab color space are denoted a₂, b₂ and C₂. The chroma of the first transmission optical system in the CIELab is defined as follows: ${C}_{1} = \sqrt{\left({{a}_{1}}^{2}+{{b}_{1}}^{2}\right)}$. Similarly, the chroma of the second transmission optical system in the CIELab is defined as follows: ${C}_{2} = \sqrt{\left({{a}_{2}}^{2}+{{b}_{2}}^{2}\right)}$.

For comparing the first transmission optical system 1 to the reference second transmission optical system 2, the hue deviation parameter ΔH* is herein defined as follows: $Δ H * = \frac{Δ h}{\left|Δh\right|} Δ {H}_{ab}$ (I) with ${ΔH}_{ab} = \sqrt{{\left({a}_{1}-{a}_{2}\right)}^{2} + {\left({b}_{1}-{b}_{2}\right)}^{2} - {\left({C}_{1}-{C}_{2}\right)}^{2}}$ $Δ h = {h}_{1} - {h}_{2}$ ${h}_{1} = \frac{180}{π} {tan}^{- 1} \left(\frac{{b}_{1}}{{a}_{1}}\right)$ ${h}_{2} = \frac{180}{π} {tan}^{- 1} \left(\frac{{b}_{2}}{{a}_{2}}\right)$

In contrast with the Δ*H_{ab}* parameter, which is always positive, the hue deviation parameter ΔH* has a sign that depends on the reference selected. The expressions above for ΔH* and ΔH_{ab} compare the first transmission optical system 1 to the second transmission optical system 2. When comparing the second transmission optical system 2 to the reference first transmission optical system 1, the hue deviation parameter ΔH* has an opposite sign while ΔH_{ab} remains unchanged.

The saturation difference ΔS* is defined as follows: $Δ S * = Δ {S}_{uv} = \frac{{C}_{uv , 1}^{∗}}{{L}_{1}^{∗}} - \frac{{C}_{uv , 2}^{∗}}{{L}_{2}^{∗}}$ (II) wherein ${C}_{uv , 1}^{∗}$ and ${L}_{1}^{∗}$ are the colorimetric parameters chroma ${C}_{uv}^{∗}$ and the lightness L*for the first transmission optical system 1 in the CIELUV color space; ${C}_{uv , 2}^{∗}$ and ${L}_{2}^{∗}$ are the colorimetric parameters chroma ${C}_{uv}^{∗}$ and the lightness L*for the second transmission optical system 2 in the CIELUV color space.

The lightness difference ΔL* for comparing the lightness of the second transmission optical system 1 to the lightness of reference first transmission optical system 2, is herein defined as follows: $Δ {L}^{∗} = {L}_{1}^{∗} - {L}_{2}^{∗}$ (III)

Despite the fact that an antireflection coating is not a light source, at least a part of the coordinates in the CIELUV color space is advantageously combined with the coordinates in the CIELab color space, to precisely define the residual reflection color of this antireflection coating.

Figure 3 shows the evolution of the saturation, lightness and brightness perception as a function of the lightness L*, in abscissa, and as a function of the saturation S*ᵤᵥ defined in the CIELUV color space and calculated for a color palette of transmission optical lenses with AR coatings having a similar blue color. A sub-set of the color palette with increasing saturation is represented by squares, a sub-set of the color palette with increasing brightness is represented by diamonds and a sub-set of the color palette with increasing lightness is represented by triangles on figure 3. On figure 3, the vertical arrow near the squares indicates an increasing saturation, the rising arrow near the diamonds indicates an increasing brightness and the descending arrow near the triangles indicates an increasing lightness.

It can be observed from figure 3, that the S*ᵤᵥ parameter seems to drive the perception of saturation/desaturation independently of the lightness L* colorimetric coordinate. However, the perception of brightness and lightness are correlated to both the S*ᵤᵥ parameter and the lightness L* colorimetric coordinate.

Another color palette of lenses transmission optical systems comprising different AR coatings is used for analysing the hue and shades of hue. Figure 4 shows the hue deviation parameter ΔH* for a set of such lenses, denoted D1, D2, D7 to D6, compared to a reference lens D3 placed at the abscise "0" of the ΔH* scale. The reference lens D3 has an orange color, as well as the lenses denoted D1 for which ΔH*=0.6. The lens denoted D2 has a pink color with ΔH*= -1. The lens denoted D4 has a red-pink color with ΔH*= -2. The lenses denoted D5, D6 and D7 have a yellow color with respectively ΔH*= 2.5 ; 6 and 7. This scale illustrating the hue deviation parameter ΔH* evolution from the reference orange reflected color shows that hue differences i.e. more red/pink than, more yellow than, or close to the orange reference, are clearly correlated to the hue deviation parameter ΔH*: respectively much lower (even negative ΔH*= -1 or -2), much higher (ΔH*= 2.5 ; 6 and 7) or close to zero ΔH*=0.6.

Figure 5 shows a graph of perceived brightness, lightness and saturation of residual reflection color for a color palette of orange AR color lenses (represented by circles), compared to other color palettes of AR lenses, respectively green lenses (represented by triangles), sapphire lenses (represented by diamonds) and drive AR coatings (represented by squares). More precisely, each color palette is represented relatively to a reference transmission optical system for said color palette, as a function of a saturation difference ΔS* from the colorimetric coordinates in CIELUV color space, in abscissa axis, and as a function of a lightness difference ΔL* in ordinate axis. The saturation difference ΔS* is calculated from the colorimetric coordinates in CIELUV color space, as disclosed in equation (II), and the lightness difference ΔL* is calculated from the colorimetric coordinates in CIELab color space, as disclosed in equation (III). In figure 5, the reference point for each color palette of AR lenses is the star with ΔS* = 0 and ΔL* = 0.

In the different families of AR lenses, the points denoted 31 presents no difference with the reference AR lens of that family of AR lenses. The points denoted 32 appear brighter than the reference AR lens. The points denoted 33 appear lighter than the reference AR lens. The points denoted 34 appear paler than the reference AR lens. The points denoted 35 appear less saturated than the reference AR lens. The points denoted 36 appear flashier than the reference AR lens.

Figure 5 highlights the non-uniformity of the (ΔL*, ΔS*) color space, depending on the hue of the AR coating of the transmission optical system considered.

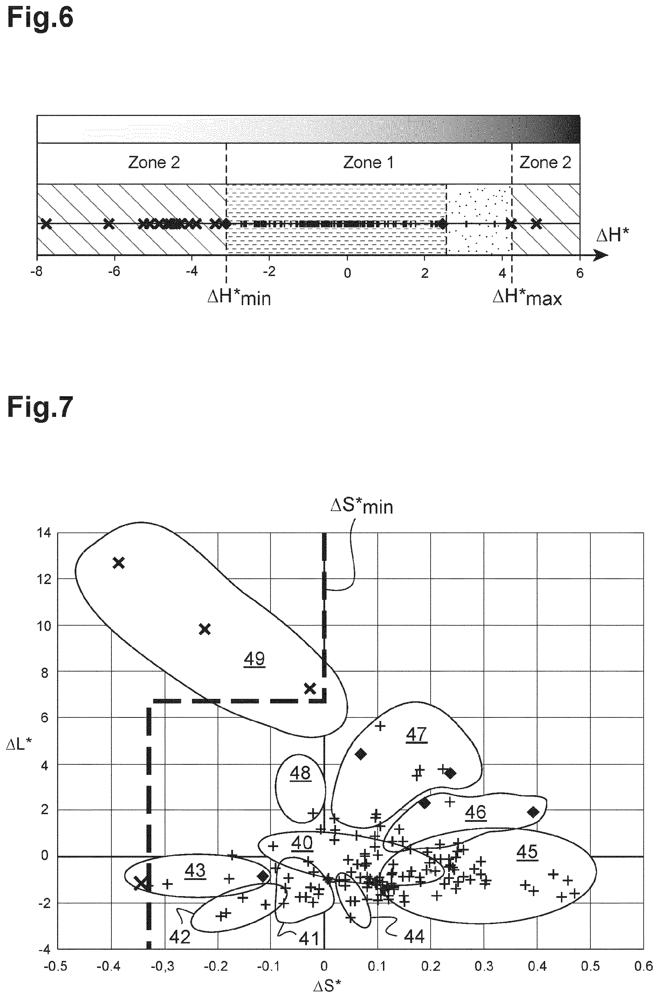

The relevance of the difference in residual reflection color, based on at least four parameters, to predict the capability of pairing an antireflection coating with another antireflection coating is investigated on specific hue of AR coatings in relation with figures 6-7.

We describe different examples for a family of green AR lenses (Figs 6-7). Quantitative values and ranges for color pairing acceptability are defined for each color or hue.

Figure 6 shows a graph of a hue deviation parameter ΔH* for different manufactured green AR lenses compared to a theoretical reference green AR lens having a stack of dielectric layers each of specific composition and theoretical thickness, the manufactured green AR lenses having the same layers composition however with thicknesses not exactly the same as the corresponding theoretical layers thicknesses of the theoretical reference green AR lens due to variation of manufacturing parameters.

More particularly, the below table 1 shows the properties of the theoretical reference green AR stack: the composition, refractive index and thickness of each of the layers of the theoretical reference green AR stack deposited on the hard coating (layer 9 being the closest to the substrate, layer 1 the farthest). Its main theoretical colorimetric parameters were calculated considering this reference stack is deposited on an hard coating layer indicated in the table, this latter being deposited on the substrate mentionned. They are provided in the table 2.

**Table 1 : Theoretical reference green AR stack**

| Layer | Material | Refractive index (510nm) | Thickness (nm) |
|---|---|---|---|
| Medium | Air | 1,000 | - |
| 1 | SiO2 | 1,474 | 95,6 |
| 2 | ITO | 1,843 | 6,5 |
| 3 | Ta2O5 | 2,150 | 37,0 |
| 4 | SiO2 | 1,474 | 38,5 |
| 5 | Ta2O5 | 2,150 | 23,4 |
| 6 | SiO2 | 1,474 | 154,7 |
| 7 | ZrO2 | 2,004 | 10,8 |
| 8 | SiO2 | 1,474 | 49,8 |
| 9 | ZrO2 | 2,004 | 12,1 |
| Hard coating | Mithril^{®} 1.6 | 1,596 | - |
| Substrate | MR8^{®} | | |
| Total Thickness | | | 428,5 |

From this theoretical reference, taking into account the manufacturing uncertainties in terms of thickness layer deposited, different AR stacks can be deposited on the same substrate and hard coating layer having serve for the theoretical colorimetric parameters calculation but they define specific colorimetric parameters and specific reflected colors not identical to the theoretical ones.

The hue deviation parameter ΔH* is calculated between each lens and the reference green AR lens. The reference green AR lens has a nominal hue angle h of 135 degrees. A team of observers examines each lens and compares it to the reference green AR lens for pairing acceptability.

In figure 6, a negative hue deviation parameter ΔH* corresponds to a more yellow color, whereas a positive hue deviation parameter ΔH* corresponds to a bluer color, as compared to the reference green AR (ΔH*=0).Two areas are identified by this visual observation : a first zone, or Zone 1, wherein the hue deviation parameter ΔH* is comprised between about -3.3 and +4.2 is a zone wherein lens pairing with the reference lens is acceptable and inside the green color palette; a second zone, or Zone 2, wherein the hue deviation parameter ΔH* is lower than about -3.3 or higher than about +4.2 is a zone wherein lens pairing with the reference green AR lens is unacceptable (respectively too yellow and too blue) and outside the green color palette.

In figures 6-7, the + sign indicates a lens that is considered as appairable (or possible to match) with the considered reference lens, and the x sign indicates a lens that is considered as non-appairable (or impracticable to match) with the considered reference lens.

The one-dimension graph of the hue deviation parameter ΔH* enables to determine a range for values of the hue deviation parameter ΔH* wherein it is possible to pair a green AR lens with the reference green lens, without an observer noticing a too large hue difference, the range being defined as follows: -3.3 ≤ ΔH* ≤ +4.2.

Figure 7 shows a two-dimension mapping of shades of hue parameters based on the lightness difference ΔL* and the saturation difference ΔS* for a set of green lenses having various residual reflection colors. A team of observers qualitatively evaluates each lens. The two-dimension mapping of shades of hue parameters based on the lightness difference ΔL* and the saturation difference ΔS* enables to determine precise aera for a (ΔL*, ΔS*) corresponding to the qualitative shades of hue. The lenses are sorted out by groups of lenses having a similar shades of hue, and labelled respectively 40, 41, 42... 49. The group of lenses 40 in an area around the point (ΔS*, ΔL*)=(0,0), corresponds to the closest from the reference green lens, with ΔL* and ΔS* close to 0, approximately -0.15 ≤ ΔS* ≤ +0.2 and -1 ≤ ΔL* ≤ 1. The group of lenses 41 in an area around the point (ΔS*, ΔL*)=(-0.05, -1.25) with -0.1 ≤ ΔS* ≤0 and -2.5 ≤ ΔL* ≤0 is qualified as matt. The group of lenses 42 in an area around the point (ΔS*, ΔL*)=(-0.15, -2.0) with -0.25 ≤ ΔS* ≤-0.08 and -1 ≤ ΔL* ≤ -3 is qualified as pale. The group of lenses 43 in an area around the point (ΔS*, ΔL*)=(-0.25, -1.0) with -0.4 ≤ ΔS* ≤ -0.1 and -2 ≤ ΔL* ≤ 0 is qualified as desaturated. The group of lenses 44 in an area around the point (ΔS*, ΔL*)=(+0.05, -2.0) with 0 ≤ ΔS* ≤ +0.1 and -3 ≤ ΔL* ≤ -1 is qualified as dark. The group of lenses 45 in an area around the point (ΔS*, ΔL*)=(+0.3, -1.0) with 0.1 ≤ ΔS* ≤ 0.5 and -3 ≤ ΔL* ≤ +1 is qualified as saturated. The group of lenses 46 in an area around the point (ΔS*, ΔL*)=(+0.25, +1.0) with approximately +0.1 ≤ ΔS* ≤ +0.4 and 0.5 ≤ ΔL* ≤ 3 is qualified as flashy. The group of lenses 47 in an area around the point (ΔS*, ΔL*)=(+0.15, +4.0) with approximately 0 ≤ ΔS* ≤ +0.3 and 1≤ ΔL* ≤ 7 is qualified as bright. The group of lenses 48 in an area around the point (ΔS*, ΔL*)=(-0.05, +3.0) with approximately - 0.1 ≤ ΔS* ≤ 0 and 1≤ ΔL* ≤ 5 is qualified as clear or light. The group of lenses 49 in an area around the point (ΔS*, ΔL*)=(-0.20, +10.0) with approximately ΔS* ≤ 0 and 7≤ ΔL*≤14 is qualified as very clear or very light.

Figure 7 also shows a dotted line defining a range for pairing a green lens with the reference green lens. The two-dimensions graph of the shades of hue parameters (ΔS*, ΔL*) enables to determine a range of values for the saturation difference ΔS* and the lightness difference ΔL*, wherein it is possible to pair a green AR lens with the reference green lens, the pairing range being defined as follows:
for $- 0.35 \leq ΔS * < 0 and ΔL * < 7 ;$
and for $0 \leq ΔS * any ΔL * .$

Thus, for the reference green lens, the combination of three attributes (ΔH*, ΔS*, ΔL*) with a hue deviation parameter ΔH* in a determined one-dimension range, and the saturation difference ΔS* and the lightness difference ΔL* in a determined two-dimension range, it is possible to determine if a green AR lens can be paired with this reference green lens: $- 3.3 \leq ΔH * \leq + 4.2$
for $- 0.35 \leq ΔS * < 0 and ΔL * < 7 ;$
and for $0 \leq ΔS * any ΔL *$

It derives from figure 6, that the range of values for pairing the hue deviation parameter ΔH* is different for the reference green lens. In other words, the pairing range of the hue deviation parameter (ΔH*ₘᵢₙ, ΔH*ₘₐₓ) depends on the value of hue, or hue angle, of the reference transmission optical system.

It derives from figures 7 that ΔS* drives the perception of saturation/desaturation, whereas ΔL* (with ΔS*<0) drives the perception of lightness.

Similar graphs of hue deviation parameter ΔH* and for two-dimension mapping of shades of hue parameters based on the lightness difference ΔL* and the saturation difference ΔS* can be obtained for other antireflection coatings having other residual reflection color, such as blue, yellow (gold), orange, pink or purple...

Thus, a database of multi-dimension pairing ranges can be obtained for various reference transmission optical systems with antireflection coatings providing a mean visible light reflection factor Rv that is less than or equal to 2.5 %. Such a database can be used for automatically determining if a transmission optical system with an antireflection coating can be paired with a reference transmission optical system of known residual color identifier.

The following table 2 provides the theoretical colorimetric parameter of the theoretical green AR reference (the nominal) and the ones of six AR manufactured from this theoretical green AR reference:

**Table 2 : Main colorimetric parameters of the green AR reference, and six manufacture AR deposited on the same hard coating/substrate device**

| | **L*** | **a*** | **b*** | **C*(ab)** | **C*(uv)** | **s(uv)** | **ΔL*** | **ΔSuv** | **ΔH*** |
|---|---|---|---|---|---|---|---|---|---|
| **green AR referenc e** | 6,9 | -5,5 | 6,9 | 8,8 | 4,8 | 0,7 | *ref* | *ref* | *ref* |
| **1** | 9,2 | -5,3 | 12,8 | 13,9 | 8,2 | 0,9 | 2,3 | 0,2 | -3,1 |
| **2** | 6,0 | -1,6 | 5,9 | 6,1 | 3,5 | 0,6 | -0,9 | -0,1 | -2,9 |
| **3** | 5,7 | -2,9 | 2,7 | 3,9 | 2,1 | 0,4 | -1,1 | -0,3 | 0,9 |
| **4** | 11,3 | -11,1 | 8,9 | 14,2 | 8,7 | 0,8 | 4,4 | 0,1 | 2,5 |
| **5** | 8,8 | -12,2 | 11,3 | 16,7 | 9,6 | 1,1 | 1,9 | 0,4 | 1,8 |
| **6** | 10,5 | -6,5 | 15,1 | 16,4 | 9,8 | 0,9 | 3,6 | 0,2 | -3,2 |

From the above combination of three attributes (ΔH*, ΔS*, ΔL*) determined for the reference green lens, reminded below, all samples are pairable but samples 1, 2 and 6 will appear slightly more yellow with their ΔH* (-3.1, -2.9 and -3.2) close to ΔH*min = -3.3: $- 3.3 \leq ΔH * \leq + 4.2$
for $- 0.35 \leq ΔS * < 0 and ΔL * < 7 ;$
and for $0 \leq ΔS * any ΔL *$

The sample 4 corresponds to the AR appearing more green, represented on the figure 2, and the sample 6 to the other AR more yellow of the same figure 2.

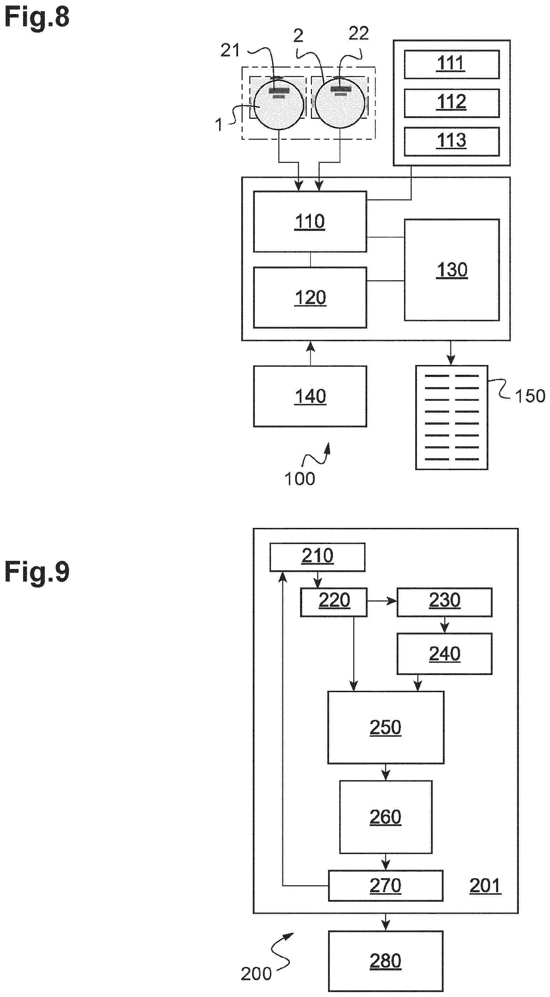

Figure 8 schematically shows an apparatus 100 for evaluating a difference in residual reflection color between a first transmission optical system 1 and a second transmission optical system 2. The first transmission optical system 1 and a second transmission optical system 2 are for example the transmission optical systems as disclosed in relation with figure 2. Alternatively, the second transmission optical system 2 corresponds to a reference transmission optical system, the residual color identifier of which is known and stored in a database 130.

The apparatus 100 comprises an identification system 110 adapted to read or determine the residual color identifier 21 of the first transmission optical system, and respectively, the residual color identifier 22 of the second transmission optical system.

In a first example, each transmission optical system 1, 2 comprises a residual color identifier 21, 22. For example, the residual color identifier 21, 22 comprises a set of four parameters : the colorimetric coordinates L*, a* and b* from the CIELab color space and the chroma value ${C}_{uv}^{∗}$ from the CIELUV color space. Alternatively, the residual color identifier 21, 22 comprises a set of four parameters : the colorimetric coordinates L*, a* and b* from the CIELab color space and the saturation value ${S}_{uv}^{*}$ from the CIELUV color space. Still alternatively, the residual color identifier 21, 22 comprises a set of five parameters : the colorimetric coordinates L*, a* and b* from the CIELab color space and the colorimetric coordinates u* and v* from the CIELUV color space.

Depending on the specific type of residual color identifier 21, 22, the identification system 110 comprises for example a camera adapted to read a textual identifier, a barcode reader, a QR-code reader and/or a system adapted to read a holographic image.

However, each transmission optical system is not provided with the associated residual color identifier. For example, in post-manufacturing phase, the first transmission optical system 1 with an antireflection coating does not yet have a residual color identifier. The identification system 110 is able to determine the residual color identifier of the transmission optical system under consideration. For that purpose, the identification system 110 further comprises a removal unit 111, a measuring unit 112 and an identification unit 113.

The removal unit 111 is adapted to remove at least partially an area of a protective outer layer formed on the interferential coating 13 of the first transmission optical system 1, in order to define a zone of the interferential coating 13 free from said protective outer layer. Preferably, the protective outer layer is removed on a limited and useless area. For example, the removal unit 111 is adapted to remove a zone of the protective outer layer by swiping with a soft cloth. Optionally, the removal unit 111 is adapted to clean the surface of the interferential coating 13 which is free from the protective outer layer prior to performing a measurement thereon.

The measuring unit 112 is adapted to provide a measurement and/or a calculation from the zone of the interferential coating free from said protective outer layer. For example, the measurement measuring unit 112 comprises a colorimeter adapted to measure the colorimetric coordinates L*, a* and b* of the interferential coating 13 in the CIELab color space and a spectrophotometer apparatus or SMR (reflectance measurement system) adapted to measure the reflection spectrum of said interferential coating, from which the colorimetric coordinates of the interferential coating 13 u* and v* in the CIELUV color space are calculated. Alternatively, or complementarily, the measurement measuring unit 112 is adapted to calculate the chroma value C*ᵤᵥ based on the colorimetric coordinates u* and v* in the CIELUV color space. Alternatively, or complementarily, the measurement measuring unit 112 is adapted to calculate the saturation value S*ᵤᵥ based on the chroma value C*ᵤᵥ in the CIELUV color space and the lightness L* colorimetric coordinate in the CIELab color space or in the CIELUV color space.

Thus, the measuring unit 112 is adapted to determine by measurement and/or calculation the residual color identifier of the first transmission optical system 1 based on at least four parameters : the colorimetric coordinates L*, a* and b* from the CIELab color space and at least one of a chroma value ${C}_{uv}^{*}$, a saturation value ${S}_{uv}^{*}$ and a pair of colorimetric coordinates u* and v*, from the CIELUV color space.

Similarly, the measuring unit 112 is adapted to determine the residual color identifier of the second transmission optical system 2.

According to various embodiments, the measuring unit 112 is adapted to measure sequentially or simultaneously the colorimetric coordinates of the interferential coating 13 and the second interferential coating 23 both in the CIELab color space and in the CIELUV color space.

The apparatus 100 optionally further comprises an identification unit 113 adapted to create the residual color identifier of a transmission optical system from the measurement and/or the calculation implemented by the measuring unit 112. For example, the identification unit 113 comprises a printer adapted to print a combination of alphanumerical characters on a label to be fixed on the transmission optical system or on the pocket associated to the transmission optical system. Alternatively, the identification unit 113 comprises a system adapted to generate a bar-code or a QR-code. Still alternatively, the identification unit 113 comprises system adapted to record an embedded safety identity marking such as a hologram, inside the transmission optical system.

The identification system 110 stores the residual color identifiers of the two optical transmission systems 1, 2 in a database 130. Alternatively, if the residual color identifier of the second transmission optical system is already stored as being that of a reference AR lens in the database 130, the identification system 110 records only the residual color identifier of the first optical transmission system 1.

The apparatus 100 also comprises a pairing unit 120 adapted to determine a difference in residual reflection color between the first transmission optical system 1 and the second transmission optical system 2. More precisely, the difference in residual reflection color is based on a comparison between the residual color identifier 21 of the first transmission optical system 1 and the residual color identifier 22 of the second transmission optical system 2. Preferably, the pairing unit 120 is adapted to calculate the hue deviation parameter ΔH* derived from the colorimetric coordinates a* and b* in CIELab color space and shades of hue parameters comprising the lightness difference ΔL* from the colorimetric coordinates in CIELab color space and the saturation difference ΔS* from the colorimetric coordinates in CIELUV color space. The equation (I) of the present disclosure enables to calculate the hue deviation parameter ΔH*. The equation (II) of the present disclosure enables to calculate the saturation difference ΔS*. The equation (III) of the present disclosure enables to calculate the lightness difference ΔL*. It is outlined that these equations (I)-(III) compare the first transmission optical system 1 to the second transmission optical system 2. In contrast, when comparing the second transmission optical system 2 to the first transmission optical system 1, the signs of the hue deviation parameter ΔH*, the saturation difference ΔS* and the lightness difference ΔL* are all reversed.

Advantageously, the pairing unit 120 is adapted to determine if the difference in residual reflection color is comprised within a predetermined multi-dimension pairing range.

For example, the second transmission optical system 2 is a reference AR lens associated to such a predetermined multi-dimension pairing range. The predetermined multi-dimension pairing range of the reference AR lens may be stored in the database 130. The pairing unit comprises a calculation unit adapted to determine firstly if the hue deviation parameter ΔH* is comprised in a predetermined pairing range of hue deviation (ΔH*min, ΔH*max). If the hue deviation parameter ΔH* is outside the predetermined range of hue deviation, the pairing unit 120 generates a non-appairable result associated to the two transmission optical systems considered. If the hue deviation parameter ΔH* is inside the predetermined range of hue deviation, the pairing unit 120 then calculates if the lightness difference ΔL* and the saturation difference ΔS* are comprised in a predetermined two-dimension pairing range of lightness difference and saturation difference. If the if the lightness difference ΔL* and the saturation difference ΔS* are outside the predetermined two-dimension pairing range of lightness difference and saturation difference, the pairing unit 120 generates a non-appairable result associated to the two transmission optical systems considered. In contrast, if the hue deviation parameter ΔH* is inside the predetermined range of hue deviation and the lightness difference ΔL* and the saturation difference ΔS* are inside the predetermined two-dimension pairing range of lightness difference and saturation difference, the pairing unit 120 generates an appairable result associated to the two transmission optical systems considered.

For example, the predetermined pairing range of hue deviation (ΔH*min, ΔH*max) depends on the value of hue angle of the reference AR lens. Similarly, the predetermined two-dimension pairing range of lightness difference and saturation difference depends on the value of hue angle of the reference AR lens.

If none of the two transmission optical systems is a reference AR lens, the pairing unit 120 uses the predetermined multi-dimension pairing range of a reference AR lens which is the closest compared to the first or second transmission optical system, based on the hue deviation parameter ΔH*, the lightness difference ΔL* and the saturation difference ΔS* between the first or second transmission optical system and this reference AR lens. Alternatively, the pairing unit 120 uses a predetermined multi-dimension pairing range comprising interpolated values for the predetermined pairing range of hue deviation (ΔH*min, ΔH*max) and for the two-dimension pairing range of lightness difference and saturation difference, the interpolated values being interpolated from the two closest reference AR lens compared to one of the first or second transmission optical system.

According to a particular aspect of the present disclosure, the apparatus 100 comprises a machine learning module 140. For example, the machine learning module 140 is conceived to determine the multi-dimension pairing range associated to a reference AR lens. The machine learning module involves as input data visual examination of a collection of transmission optical systems to be compared to a reference optical system having a target residual reflection color and as output data a validation or an invalidation of a pairing of the reference optical system with any one of the transmission optical system of the collection. The output data of the machine learning module 140 may thus be stored in the database 130.

The apparatus 100 enables to associate by pairs manufactured transmission optical systems with AR coatings, according to their residual color identifiers. The comparison of the two residual color identifiers is used as disclosed herein to predict if two transmission optical systems are appairable. Based only on the residual color identifiers, it is possible to determine numerically if two AR optical systems are appairable. Conversely, if a first transmission optical system is non appairable with a second reference transmission optical system, based on the comparison of their residual color identifiers, the first transmission optical system may be disregarded for pairing with the second transmission optical system.

The pairs of AR coatings may be appaired digitally in the database 130 based on their residual color identifiers. Furthermore, all the manufactured transmission optical systems with AR coatings may be sorted out by pairs according to their residual color identifiers. To that end, the apparatus 100 comprises a sorting module 150 adapted to classify pairs of optical transmission systems, when their residual color identifiers are in a determined pairing range. As disclosed above, the determined pairing range comprises a multi-dimension pairing range. For example, the determined pairing range comprises a one-dimension determined range of hue deviation, and a two-dimension pairing range of lightness difference and saturation difference. In general, the determined pairing range depends on the value of hue angle of one of the transmission optical systems. Alternatively, or complementarily, the pairing range depends on the difference in residual reflection colors between the two optical transmission systems of each pair. For example, a collection of manufactured transmission optical systems with AR coatings is sorted out by taking a first lens with a first residual color identifier as a reference and determining for each other transmission optical system, if the hue deviation parameter compared to the first lens is within or outside a predetermined pairing range. The transmission optical system presenting a hue deviation parameter outside the predetermined pairing range associated to the first lens are disregarded for pairing with the first lens. The lightness difference and saturation difference of the other transmission optical systems is then compared to the predetermined pairing range associated to the first lens. The lens closest to the first lens in the multi-dimension pairing range is appaired with the first lens and can be placed next to each other in the sorting module 150. This process is repeated until the collection of manufactured transmission optical systems with AR coatings is completely sorted out in the sorting module 150.

Knowing the residual color identifier of a first transmission optical system with an AR coating, the apparatus 100 and method according to the present disclosure enables to select a second appairable transmission optical system, based on its residual color identifier. The apparatus 100 finds an application in the replacement of a broken antireflection lens, when a non-broken AR lens remains mounted on the frame. The apparatus 100 enables to identify rapidly a new AR lens having a residual color identifier warranting that the new AR lens presents a residual reflection color matching with the non-broken AR lens.

The residual color identifier is also useful during the conception of a new interferential coating designed for a transmission optical system in order to predict the color of the antireflection coating and ensure a robust manufacturing thereof.

To that end, an optical design software (third party commercially available design software program, such as, e.g., TFCalc, Essential Macleod, OptiLayer, FilmStar, etc) running on a computer system is used to define a theoretical interferential coating comprising a stack of dielectric layers. The optical design software is used to simulate the response of the theoretical interferential coating and to calculate the mean visible light reflection factor Rv of the theoretical interferential coating. The optical design software is adapted to adjust the thicknesses of different layers of the stack so that the mean visible light reflection factor Rv is less than or equal to 2.5 %, and preferably less than or equal to 2.0 %.

Furthermore, the optical design software is adapted to calculate a nominal residual color identifier based in part on the colorimetric coordinates of the theoretical interferential coating in CIELab color space and in part on the colorimetric coordinates of the theoretical interferential coating in CIELUV color space. Preferably, the nominal residual color identifier of the theoretical interferential coating is based on at least four parameters : the colorimetric coordinates L*, a* and b* of the theoretical interferential coating from the CIELab color space and at least one of a chroma value ${C}_{uv}^{*}$, a saturation value ${S}_{uv}^{*}$ and a pair of colorimetric coordinates u* and v* of the theoretical interferential coating from the CIELUV color space. The optical design software also calculates the nominal hue angle (h) of the theoretical interferential coating in the CIELab color space, based on the ratio a*/b* in the equation mentioned above.

Ranges of manufacturing variations in the stack of dielectric layers are entered as input data in the optical design software. For example, the ranges of manufacturing variations include minimum, maximum, uncertainty and step values for several variable parameters such as layers thickness. Based on the range of manufacturing variations, the optical design software generates a collection of predictable interferential coatings. Each predictable interferential coating of the collection corresponds to a specific stack of dielectric layers within the defined ranges of manufacturing variations.

For each predictable interferential coating of the collection, the optical design software is adapted to calculate a predictable residual color identifier based in part on the colorimetric coordinates of the theoretical interferential coating in CIELab color space and in part on the colorimetric coordinates of the theoretical interferential coating in CIELUV color space. Preferably, the predictable residual color identifier of each predictable interferential coating is based on at least four parameters : the colorimetric coordinates L*, a* and b* of each predictable interferential coating from the CIELab color space and at least one of a chroma value ${C}_{uv}^{*}$, a saturation value ${S}_{uv}^{*}$ and a pair of colorimetric coordinates u* and v* of each predictable interferential coating from the CIELUV color space. The optical design software also calculates the predictable hue angle (h) of each predictable interferential coating in the CIELab color space, based on the ratio a*/b* for each predictable interferential coating using the equation mentioned above.

Then, for each predictable interferential coating of the collection, the optical design software is adapted to calculate a difference in residual reflection color between the predictable interferential coating and the theoretical interferential coating based on the predictable residual reflection color identifier of the predictable interferential coating and on the nominal residual color identifier of the theoretical interferential coating.

A pairing database stores at least one pretermined multi-dimension pairing range, preferably associated to the nominal hue angle of the theoretical interferential coating. Preferably, the multi-dimension pairing range comprises a pairing range of a hue deviation parameter associated to the nominal hue angle and a two-dimension pairing range of lightness difference and saturation difference associated to the nominal hue angle and to said nominal residual color identifier.

For example, the theoretical interferential coating is a reference green lens and the multi-dimension pairing range comprises a pairing range of a hue deviation parameter associated to the nominal hue angle of the reference green lens (as disclosed in relation with figure 6) and a two-dimension pairing range of lightness difference and saturation difference associated to the nominal hue angle and to said nominal residual color identifier of the reference green lens (as disclosed in relation with figure 7).

The optical design software is adapted to use the pairing database to validate or invalidate if each predictable interferential coating of the collection presents with the theoretical interferential coating a difference in residual reflection color inside the predetermined multi-dimension pairing range associated to the nominal residual color identifier of the theoretical interferential coating.

The optical design software further comprises a validation unit adapted to adjust the thickness of the layers of the stack of the theoretical interferential coating until a predetermined number or percentage of the collection of predictable interferential coatings is within the multi-dimension pairing range associated to the nominal residual color identifier of the theoretical interferential coating. For example, Alternatively, the predetermined percentage is preferably set to 80%, preferably 90 % and more preferably 97%.

As a result, the optical design software enables to determine a collection of predictable interferential coatings having a predictable residual reflection color matching with the residual reflection color of the theoretical interferential coating. The collection of predictable interferential coatings enables to manufacture the desired stack of dielectric layers having a reliable and reproducible residual reflection color while remaining within determined ranges of manufacturing variations. Thus, all the manufactured stacks of dielectric layers are appairable with each other. A stack of dielectric layers appairable with another AR coating can be manufactured easily, without the need for experts in colors to validate one by one each predictable interferential coating the collection.

Furthermore, the optical design software is not only valid for a particular value of nominal hue and can be adjusted easily to different hues using and/or completing the pairing database.

Figure 9 shows a system 200 for manufacturing a transmission optical system 1 comprising an optical base element 14 and an interferential coating 13 on at least one face 11 of the base element 14. The interferential coating 13 is designed and manufactured to provide the transmission optical system 1 with a mean visible light reflection factor Rv that is less than or equal to 2.5 %, and preferably less than or equal to 2.0 %, and so that the transmission optical system 1 presents by reflection on said face 11 a predetermined residual reflection color.

More precisely, the system 200 for manufacturing a transmission optical system 1 comprises a computer system 201 configured to operate an optical design software and a deposition unit 280 for depositing a stack of dielectric layers on an optical base element. The deposition unit 280 is generally remote from the computer system 201.

More precisely, the optical design software comprises a module 210 designed to define a theoretical interferential coating comprising a stack of dielectric layers to be deposited on a theoretical base element so as to simulate a transmission optical system. The stack of dielectric layers is generally defined by the total number of layers, the thickness of each layer, their composition, the optical refraction index of each layer, and the order of each layer relatively to the base element and to the other layers of the stack. The module 210 is adapted to calculate the mean visible light reflection factor Rv of the theoretical interferential coating. More precisely, the theoretical interferential coating is defined to provide the transmission optical system with a mean visible light reflection factor Rv that is less than or equal to 2.5 % and preferably less than or equal to 2.0 %.

The optical design software comprises a module 220 to calculate a nominal hue angle of the theoretical interferential coating in the CIELab color space and a nominal residual color identifier of the theoretical interferential coating based in part on colorimetric coordinates in CIELab color space and in part on colorimetric coordinates in CIELUV color space, as disclosed herein.

The optical design software comprises a module 230 to define ranges of manufacturing variations in the stack of dielectric layers. The module 230 enables forming a collection of predictable interferential coatings covering the whole ranges of manufacturing variations.

The optical design software comprises a module 240 to calculate, for each predictable interferential coating of the collection, a predictable hue angle in the CIELab color space and a predictable residual color identifier as disclosed herein.

The optical design software comprises a module 250 to calculate, for each predictable interferential coating of the collection, a difference in residual reflection color between the predictable interferential coating and the theoretical interferential coating based on the predictable residual reflection color identifier of the predictable interferential coating and on the nominal residual color identifier of the theoretical interferential coating. Preferably, the module 250 calculates the hue deviation parameter ΔH*, the lightness difference ΔL* and the saturation difference ΔS* for each predictable interferential coating of the collection compared to the theoretical interferential coating, based on the equations (I), (II) and (III) above.

The optical design software comprises a module 260 to validate or invalidate if each predictable interferential coating of the collection presents with the theoretical interferential coating a difference in residual reflection color inside a multi-dimension pairing range associated to the nominal residual color identifier of the theoretical interferential coating. The module 260 uses a pairing database storing at least one predetermined multi-dimension pairing range associated to the nominal hue angle of the theoretical interferential coating. Preferably, the pairing database includes several predetermined multi-dimension pairing ranges as a function of predetermined hue angles.

The optical design software comprises a validation unit 270 adapted to adjust the stack of dielectric layers of the theoretical interferential coating until the module 260 obtains that a predetermined number or percentage of the collection of predictable interferential coatings is within the multi-dimension pairing range associated to the nominal residual color identifier of the theoretical interferential coating.

When the predetermined number or percentage is reached, the computer system 201 is adapted to send instructions to the deposition unit 280 for depositing a stack of dielectric layers on an optical base element, according to the theoretical interferential coating. Optional, the system 200 further comprises an identification unit 113 adapted to create the residual color identifier of each transmission optical system based on the predictable residual color identifier calculated by the module 240.

The system 200 for manufacturing a transmission optical system enables to validate the design of a new theoretical AR coating and evaluate its robustness to define pairable manufactured antireflection stacks. The system 200 for manufacturing a transmission optical system avoids high prototyping workload and time-consuming expertise from color experts to define antireflection stacks having a predictable residual reflection color that is reproducible in manufacturing conditions. The manufacturing system and method according to the present disclosure is not limited to a specific hue angle of antireflection coating, and can be implanted easily for any other hue.

## Claims

1. A transmission optical system (1) comprising an optical base element (14) having a first face (11) adapted to receive incident optical lights (10) and a second face (12) through which transmitted optical lights exit (30), the transmission optical system comprising an interferential coating (13) on the first face (11) providing the transmission optical system with a mean visible light reflection factor Rv that is less than or equal to 2.5 %, said transmission optical system presenting by reflection on said first face (11) a residual reflection color, **characterised in that** the transmission optical system comprises a residual color identifier for determining said residual reflection color, the residual color identifier being based in part on colorimetric coordinates of the transmission optical system in CIELab color space and in part on colorimetric coordinates of the transmission optical system in CIELUV color space.

2. The transmission optical system according to claim 1, wherein the residual color identifier is based on colorimetric coordinates L*, a* and b* from the CIELab color space and on at least one of a chroma value C*ᵤᵥ , a saturation value S*ᵤᵥ and a pair of colorimetric coordinates u* and v*, from the CIELUV color space.

3. Apparatus for evaluating a difference in residual reflection color between a first transmission optical system and a second transmission optical system, wherein each of the first and second transmission optical system comprises an optical base element (14) having a first face (11) adapted to receive incident optical lights (10) and a second face (12) through which transmitted optical lights exit (30), each of the first and second transmission optical system comprising an interferential coating (13) on the first face (11) providing the first, and respectively second, transmission optical system with a mean visible light reflection factor Rv that is less than or equal to 2.5 %, each of the first and second transmission optical system presenting by reflection on said first face (11) a residual reflection color, **characterised by** said apparatus comprising:
- an identification system (110) adapted to read or determine a residual color identifier of the first transmission optical system, and respectively, of the second transmission optical system; the residual color identifier of the first transmission optical system being based in part on colorimetric coordinates of the first transmission optical system in CIELab color space and in part on colorimetric coordinates of the first transmission optical system in CIELUV color space and the residual color identifier of the second transmission optical system being based in part on colorimetric coordinates of the second transmission optical system in CIELab color space and in part on colorimetric coordinates of the second transmission optical system in CIELUV color space;
- a pairing unit (120) adapted to determine a difference in residual reflection color between the first and second transmission optical systems, said difference in residual reflection color being based on a comparison between the residual color identifier of the first transmission optical system and the residual color identifier of the second transmission optical system.

4. Apparatus according to claim 3, wherein the pairing unit (120) is adapted to determine if the difference in residual reflection color is comprised within a predetermined multi-dimension pairing range.

5. Apparatus according to claim 3 or 4 wherein said difference in residual reflection color comprises a set of parameters comprising a hue deviation parameter ΔH* derived from the colorimetric coordinates a* and b* in CIELab color space and shades of hue parameters comprising a lightness difference ΔL* from the colorimetric coordinates in CIELab color space and a saturation difference ΔS* from the colorimetric coordinates in CIELUV color space.

6. Apparatus according to claims 4 and 5, wherein the pairing unit (120) is adapted to determine if the hue deviation parameter ΔH* is comprised in a predetermined pairing range of hue deviation (ΔH*ₘᵢₙ, ΔH*ₘₐₓ), and wherein the pairing unit is adapted to determine if the lightness difference ΔL* and the saturation difference ΔS* are comprised in a predetermined two-dimension pairing range of lightness difference and saturation difference.

7. Apparatus according to claim 6, wherein the predetermined pairing range of hue deviation (ΔH*ₘᵢₙ, ΔH*ₘₐₓ) depends on the value of hue angle, and wherein the predetermined two-dimension pairing range of lightness difference and saturation difference depends on the value of hue angle.

8. Apparatus according to any one of claims 5 to 7 wherein the hue deviation parameter ΔH* of the first transmission optical system compared to the second transmission optical system is equal to $Δ H * = \frac{Δ h}{\left|Δh\right|} Δ {H}_{ab}$ wherein Δ*h = h*₁ *- h*₂ is a difference between a hue angle h1 of the first transmission optical system and a hue angle h2 of the second transmission optical system and $Δ {H}_{ab} = \sqrt{{\left({a}_{1}-{a}_{2}\right)}^{2} + {\left({b}_{1}-{b}_{2}\right)}^{2} - {\left({C}_{1}-{C}_{2}\right)}^{2}}$ wherein a₁, b₁ are the colorimetric coordinates and *C₁* the chroma ${C}_{1} = \sqrt{\left({{a}_{1}}^{2}+{{b}_{1}}^{2}\right)}$ of the first transmission optical system in the CIELab color space and, respectively a₂, b₂ are the colorimetric coordinates and *C₂* the chroma ${C}_{2} = \sqrt{\left({{a}_{2}}^{2}+{{b}_{2}}^{2}\right)}$ of the second transmission optical system in the CIELab color space.

9. Apparatus according to any one of claims 5 to 8 wherein the multi-dimension pairing range is determined by machine learning (140) involving as input data visual examination of a collection of transmission optical systems to be compared to a reference optical system having a target residual reflection color and as output data a validation or an invalidation of a pairing of the reference optical system with any one of the transmission optical systems of the collection.

10. Apparatus according to any one of claims 6 to 9, the apparatus comprising a database (130) of residual color identifiers of transmission optical systems, and wherein the apparatus is adapted to select in said database (130) a pair of two optical transmission systems having a difference in residual reflection color wherein the hue deviation parameter ΔH* is comprised in a predetermined pairing range of hue deviation (ΔH*ₘᵢₙ, ΔH*ₘₐₓ) and wherein the lightness difference ΔL* and the saturation difference ΔS* are comprised in a predetermined two-dimension pairing range of lightness difference and saturation difference.

11. Apparatus according to any one of claims 3 to 10, comprising a sorting module (150) adapted to classify pairs of two optical transmission systems in determined pairing ranges as a function of the value of hue angle and/or as a function of the difference in residual reflection color between the two optical transmission systems of each pair.

12. Apparatus according to any one of claims 3 to 11, wherein the identification system (110) comprises:
i. a removal unit (111) adapted to remove at least partially an area of a protective outer layer formed on the interferential coating (13) and to define a zone of the interferential coating free from said protective outer layer;
ii. a measuring unit (112) adapted to provide a measurement and/or a calculation from the zone of the interferential coating free from said protective outer layer, said measurement and/or calculation comprising colorimetric coordinates L*, a* and b* from CIELab color space and at least one of a chroma value C*ᵤᵥ or a saturation value S*ᵤᵥ , or a pair of colorimetric coordinates u* and v*, from CIELUV color space;
iii. an identification unit (113) adapted to create the residual color identifier from the measurement and/or the calculation implemented by the measuring unit.

13. System for manufacturing a transmission optical system comprising an optical base element (14) and an interferential coating (13) on at least one face of the base element, the interferential coating (13) providing the transmission optical system with a mean visible light reflection factor Rv that is less than or equal to 2.5 %, said transmission optical system presenting by reflection on said face a predetermined residual reflection color, wherein the system comprises:
- a computer system (201) comprising an optical design software adapted to :
a) define a theoretical interferential coating comprising a stack of dielectric layers, said theoretical interferential coating having a mean visible light reflection factor Rv that is less than or equal to 2.5 %;
b) calculate a nominal hue angle in the CIELab color space and a nominal residual color identifier based in part on colorimetric coordinates in CIELab color space and in part on colorimetric coordinates in CIELUV color space of the theoretical interferential coating;
c) define ranges of manufacturing variations in the stack of dielectric layers so as to form a collection of predictable interferential coatings;
d) for each predictable interferential coating of the collection, calculate a predictable hue angle in the CIELab color space and a predictable residual color identifier based in part on colorimetric coordinates in CIELab color space and in part on colorimetric coordinates in CIELUV color space;
e) for each predictable interferential coating of the collection, calculate a difference in residual reflection color between the predictable interferential coating and the theoretical interferential coating based on the predictable residual reflection color identifier of the predictable interferential coating and on the nominal residual color identifier of the theoretical interferential coating;
f) use a pairing database storing predetermined multi-dimension pairing ranges as a function of predetermined hue angles to validate or invalidate if each predictable interferential coating of the collection presents with the theoretical interferential coating a difference in residual reflection color inside a multi-dimension pairing range associated to the nominal residual color identifier of the theoretical interferential coating, said multi-dimension pairing range comprising a pairing range of a hue deviation parameter associated to the nominal hue angle and a two-dimension pairing range of lightness difference and saturation difference associated to the nominal hue angle and to said nominal residual color identifier;
- a validation unit (270) adapted to adjust the stack of dielectric layers of the theoretical interferential coating until a predetermined number or percentage of the collection of predictable interferential coatings is within the multi-dimension pairing range associated to the nominal residual color identifier of the theoretical interferential coating;
- a deposition unit (280) for depositing on an optical base element (14) a stack of dielectric layers according to the theoretical interferential coating.

14. System according to claim 13 wherein:
at step b) the nominal residual color identifier of the theoretical interferential coating is based on the colorimetric coordinates L*, a* and b* from CIELab color space and at least one of a chroma value C*ᵤᵥ , a saturation value S*ᵤᵥ and a pair of colorimetric coordinates u* and v*, from CIELUV color space; and
at step d) the predictable residual color identifier of each predictable interferential coating is based on the colorimetric coordinates L*, a* and b* from CIELab color space and at least one of a chroma value C*ᵤᵥ or a saturation value S*ᵤᵥ , or a pair of colorimetric coordinates u* and v*, from CIELUV color space; and
at step e) the difference in residual reflection color between each predictable interferential coating and the theoretical interferential coating comprises a hue deviation parameter ΔH* derived from the colorimetric coordinates a* and b* in CIELab color space and shades of hue parameters comprising a lightness difference ΔL* from the colorimetric coordinates in CIELab color space and a saturation difference ΔS* from the colorimetric coordinates in CIELUV color space of each predictable interferential coating and of the theoretical interferential coating.

15. System according to claim 14 wherein the hue deviation parameter ΔH* between each predictable interferential coating and the theoretical interferential coating is equal to $Δ H * = \frac{Δ h}{\left|Δh\right|} Δ {H}_{ab}$ wherein Δ*h = h*₁ *- h*₂ is a difference between a hue angle h1 of the predictable interferential coating and a hue angle h2 of the theoretical interferential coating and $Δ {H}_{ab} = \sqrt{{\left({a}_{1}-{a}_{2}\right)}^{2} + {\left({b}_{1}-{b}_{2}\right)}^{2} - {\left({C}_{1}-{C}_{2}\right)}^{2}}$ wherein a₁, b₁ are the colorimetric coordinates and *C₁* the chroma ${C}_{1} = \sqrt{\left({{a}_{1}}^{2}+{{b}_{1}}^{2}\right)}$ of the predictable interferential coating in the CIELab color space, and respectively a₂, b₂ are the colorimetric coordinates and *C₂* the chroma ${C}_{2} = \sqrt{\left({{a}_{2}}^{2}+{{b}_{2}}^{2}\right)}$ of the theoretical interferential coating in the CIELab color space.

## Patentansprüche

1. Optisches Transmissionssystem (1), das ein optisches Basiselement (14) mit einer ersten Fläche (11), die dazu eingerichtet ist, einfallende optische Lichter (10) zu empfangen, und einer zweiten Fläche (12), durch die transmittierte optische Lichter austreten (30), umfasst, wobei das optische Transmissionssystem eine Interferenzbeschichtung (13) auf der ersten Fläche (11) umfasst, die dem optischen Transmissionssystem einen mittleren Reflexionsfaktor Rv für sichtbares Licht verleiht, der kleiner als oder gleich 2,5 % ist, wobei das optische Transmissionssystem durch Reflexion an der ersten Fläche (11) eine Restreflexionsfarbe präsentiert, **dadurch gekennzeichnet, dass** das optische Transmissionssystem einen Restfarbidentifikator zum Bestimmen der Restreflexionsfarbe umfasst, wobei der Restfarbidentifikator teilweise auf kolorimetrischen Koordinaten des optischen Transmissionssystems im CIELab-Farbraum und teilweise auf kolorimetrischen Koordinaten des optischen Transmissionssystems im CIELUV-Farbraum basiert.

2. Optisches Transmissionssystem nach Anspruch 1, wobei der Restfarbidentifikator auf kolorimetrischen Koordinaten L*, a* und b* aus dem CIELab-Farbraum und auf einem Chroma-Wert C*ᵤᵥ und/oder einem Sättigungswert S*ᵤᵥ und einem Paar kolorimetrischer Koordinaten u* und v* aus dem CIELUV-Farbraum basiert.

3. Einrichtung zum Auswerten einer Differenz einer Restreflexionsfarbe zwischen einem ersten optischen Transmissionssystem und einem zweiten optischen Transmissionssystem, wobei jedes des ersten und zweiten optischen Transmissionssystems ein optisches Basiselement (14) mit einer ersten Fläche (11), die dazu eingerichtet ist, einfallende optische Lichter (10) zu empfangen, und einer zweiten Fläche (12), durch die transmittierte optische Lichter austreten (30), umfasst, wobei jedes des ersten und zweiten optischen Transmissionssystems eine Interferenzbeschichtung (13) auf der ersten Fläche (11) umfasst, die dem ersten bzw. zweiten optischen Transmissionssystem einen mittleren Reflexionsfaktor Rv für sichtbares Licht verleiht, der kleiner als oder gleich 2,5 % ist, wobei jedes des ersten und zweiten optischen Transmissionssystems durch Reflexion an der ersten Fläche (11) eine Restreflexionsfarbe präsentiert, **dadurch gekennzeichnet, dass** die Einrichtung Folgendes umfasst:
- ein Identifikationssystem (110), das dazu eingerichtet ist, einen Restfarbidentifikator des ersten optischen Transmissionssystems bzw. des zweiten optischen Transmissionssystems zu lesen oder zu bestimmen; wobei der Restfarbidentifikator des ersten optischen Transmissionssystems teilweise auf kolorimetrischen Koordinaten des ersten optischen Transmissionssystems im CIELab-Farbraum und teilweise auf kolorimetrischen Koordinaten des ersten optischen Transmissionssystems im CIELUV-Farbraum basiert und der Restfarbidentifikator des zweiten optischen Transmissionssystems teilweise auf kolorimetrischen Koordinaten des zweiten optischen Transmissionssystems im CIELab-Farbraum und teilweise auf kolorimetrischen Koordinaten des zweiten optischen Transmissionssystems im CIELUV-Farbraum basiert;
- eine Paarungseinheit (120), die dazu eingerichtet ist, eine Differenz der Restreflexionsfarbe zwischen dem ersten und zweiten optischen Transmissionssystem zu bestimmen, wobei die Differenz der Restreflexionsfarbe auf einem Vergleich zwischen dem Restfarbidentifikator des ersten optischen Transmissionssystems und dem Restfarbidentifikator des zweiten optischen Transmissionssystems basiert.

4. Einrichtung nach Anspruch 3, wobei die Paarungseinheit (120) dazu eingerichtet ist, zu bestimmen, ob die Differenz der Restreflexionsfarbe innerhalb eines vorbestimmten mehrdimensionalen Paarungsbereichs enthalten ist.

5. Einrichtung nach Anspruch 3 oder 4, wobei die Differenz der Restreflexionsfarbe einen Satz von Parametern umfasst, die einen Farbtonabweichungsparameter ΔH*, der von den kolorimetrischen Koordinaten a* und b* im CIELab-Farbraum abgeleitet wird, und Abstufungen von Farbtonparametern, die eine Helligkeitsdifferenz ΔL* von den kolorimetrischen Koordinaten im CIELab-Farbraum und eine Sättigungsdifferenz ΔS* von den kolorimetrischen Koordinaten im CIELUV-Farbraum umfassen, umfassen.

6. Einrichtung nach Anspruch 4 und 5, wobei die Paarungseinheit (120) dazu eingerichtet ist, zu bestimmen, ob der Farbtonabweichungsparameter ΔH* in einem vorbestimmten Paarungsbereich einer Farbtonabweichung (ΔH*ₘᵢₙ, ΔH*ₘₐₓ) enthalten ist, und wobei die Paarungseinheit dazu eingerichtet ist, zu bestimmen, ob die Helligkeitsdifferenz ΔL* und die Sättigungsdifferenz ΔS* in einem vorbestimmten zweidimensionalen Paarungsbereich einer Helligkeitsdifferenz und Sättigungsdifferenz enthalten sind.

7. Einrichtung nach Anspruch 6, wobei der vorbestimmte Paarungsbereich der Farbtonabweichung (ΔH*ₘᵢₙ, ΔH*ₘₐₓ) von dem Wert des Farbtonwinkels abhängt und wobei der vorbestimmte zweidimensionale Paarungsbereich der Helligkeitsdifferenz und Sättigungsdifferenz von dem Wert des Farbtonwinkels abhängt.

8. Einrichtung nach einem der Ansprüche 5 bis 7, wobei der Farbtonabweichungsparameter ΔH* des ersten optischen Transmissionssystems im Vergleich zu dem zweiten optischen Transmissionssystem gleich $Δ H * = \frac{Δ h}{\left|Δh\right|} Δ {H}_{ab}$ ist, wobei Δh = h₁ - h₂ eine Differenz zwischen einem Farbtonwinkel h1 des ersten optischen Transmissionssystems und einem Farbtonwinkel h2 des zweiten optischen Transmissionssystems ist und $Δ {H}_{ab} = \sqrt{{\left({a}_{1}-{a}_{2}\right)}^{2} + {\left({b}_{1}-{b}_{2}\right)}^{2} - {\left({C}_{1}-{C}_{2}\right)}^{2}}$, wobei a₁, b₁ die kolorimetrischen Koordinaten sind und C₁ die Chroma ${C}_{1} = \sqrt{\left({{a}_{1}}^{2}+{{b}_{1}}^{2}\right)}$ des ersten optischen Transmissionssystems in dem CIELab-Farbraum bzw. a₂, b₂ die kolorimetrischen Koordinaten und C₂ die Chroma ${C}_{2} = \sqrt{\left({{a}_{2}}^{2}+{{b}_{2}}^{2}\right)}$ des zweiten optischen Transmissionssystems in dem CIELab-Farbraum sind.

9. Einrichtung nach einem der Ansprüche 5 bis 8, wobei der mehrdimensionale Paarungsbereich durch Maschinenlernen (140) bestimmt wird, das als Eingangsdaten eine visuelle Untersuchung einer Sammlung von optischen Transmissionssystemen, die mit einem optischen Referenzsystem mit einer Zielrestreflexionsfarbe zu vergleichen sind, und als Ausgangsdaten eine Validierung oder eine Invalidierung einer Paarung des optischen Referenzsystems mit irgendeinem der optischen Transmissionssysteme der Sammlung einschließt.

10. Einrichtung nach einem der Ansprüche 6 bis 9, wobei die Einrichtung eine Datenbank (130) von Restfarbidentifikatoren von optischen Transmissionssystemen umfasst, und wobei die Einrichtung dazu eingerichtet ist, in der Datenbank (130) ein Paar von zwei optischen Transmissionssystemen mit einer Differenz der Restreflexionsfarbe auszuwählen, wobei der Farbtonabweichungsparameter ΔH* in einem vorbestimmten Paarungsbereich der Farbtonabweichung (ΔH*ₘᵢₙ, ΔH*ₘₐₓ) enthalten ist und wobei die Helligkeitsdifferenz ΔL* und die Sättigungsdifferenz ΔS* in einem vorbestimmten zweidimensionalen Paarungsbereich der Helligkeitsdifferenz und Sättigungsdifferenz enthalten sind.

11. Einrichtung nach einem der Ansprüche 3 bis 10, das ein Sortiermodul (150) umfasst, das dazu eingerichtet ist, Paare von zwei optischen Transmissionssystemen in bestimmten Paarungsbereichen als eine Funktion des Wertes des Farbtonwinkels und/oder als eine Funktion der Differenz der Restreflexionsfarbe zwischen den zwei optischen Transmissionssystemen jedes Paars zu klassifizieren.

12. Einrichtung nach einem der Ansprüche 3 bis 11, wobei das erste Identifikationssystem (110) Folgendes umfasst:
i. eine Entfernungseinheit (111), die dazu eingerichtet ist, einen Bereich einer äußeren Schutzschicht, die auf der Interferenzbeschichtung (13) gebildet ist, wenigstens teilweise zu entfernen und eine Zone der Interferenzbeschichtung zu definieren, die frei von der äußeren Schutzschicht ist;
ii. eine Messungseinheit (112), die dazu eingerichtet ist, eine Messung und/oder eine Berechnung von der Zone der Interferenzbeschichtung bereitzustellen, die frei von der äußeren Schutzschicht ist, wobei die Messung und/oder Berechnung kolorimetrische Koordinaten L*, a* und b* aus dem CIELab-Farbraum und wenigstens eines von einem Chroma-Wert C*ᵤᵥ oder einem Sättigungswert S*ᵤᵥ oder ein Paar kolorimetrischer Koordinaten u* und V* aus dem CIELUV-Farbraum umfasst;
iii. eine Identifikationseinheit (113), die dazu eingerichtet ist, den Restfarbidentifikator aus der Messung und/oder der Berechnung, die durch die Messungseinheit implementiert wird, zu erzeugen.

13. System zum Herstellen eines optischen Transmissionssystems, das ein optisches Basiselement (14) und eine Interferenzbeschichtung (13) auf wenigstens einer Fläche des Basiselements umfasst, wobei die Interferenzbeschichtung (13) dem optischen Transmissionssystem einen mittleren Reflexionsfaktor Rv für sichtbares Licht bereitstellt, der kleiner als oder gleich 2,5 % ist, wobei das optische Transmissionssystem durch Reflexion an der Fläche eine vorbestimmte Restreflexionsfarbe präsentiert, wobei das System Folgendes umfasst:
- ein Computersystem (201), das eine optische Designsoftware umfasst, die zu Folgendem eingerichtet ist:
a) Definieren einer theoretischen Interferenzbeschichtung, die einen Stapel dielektrischer Schichten umfasst, wobei die theoretische Interferenzbeschichtung einen mittleren Reflexionsfaktor Rv für sichtbares Licht aufweist, der kleiner als oder gleich 2,5 % ist;
b) Berechnen eines nominalen Farbtonwinkels im CIELab-Farbraum und eines nominalen Restfarbidentifikators basierend teilweise auf kolorimetrischen Koordinaten im CIELab-Farbraum und teilweise auf kolorimetrischen Koordinaten im CIELUV-Farbraum der theoretischen Interferenzbeschichtung;
c) Definieren von Bereichen von Herstellungsvariationen in dem Stapel dielektrischer Schichten, so dass eine Sammlung vorhersagbarer Interferenzbeschichtungen gebildet wird;
d) für jede vorhersagbare Interferenzbeschichtung der Sammlung, Berechnen eines vorhersagbaren Farbtonwinkels in dem CIELab-Farbraum und eines vorhersagbaren Restfarbidentifikators basierend teilweise auf kolorimetrischen Koordinaten im CIELab-Farbraum und teilweise auf kolorimetrischen Koordinaten im CIELUV-Farbraum;
e) für jede vorhersagbare Interferenzbeschichtung der Sammlung, Berechnen einer Differenz der Restreflexionsfarbe zwischen der vorhersagbaren Interferenzbeschichtung und der theoretischen Interferenzbeschichtung basierend auf dem vorhersagbaren Restreflexionsfarbidentifikator der vorhersagbaren Interferenzbeschichtung und auf dem nominalen Restfarbidentifikator der theoretischen Interferenzbeschichtung;
f) Verwenden einer Paarungsdatenbank, die vorbestimmte mehrdimensionale Paarungsbereiche als eine Funktion von vorbestimmten Farbtonwinkeln speichert, um zu validieren oder invalidieren, falls jede vorhersagbare Interferenzbeschichtung der Sammlung mit der theoretischen Interferenzbeschichtung eine Differenz einer Restreflexionsfarbe innerhalb eines mehrdimensionalen Paarungsbereichs präsentiert, der mit dem nominalen Restfarbidentifikator der theoretischen Interferenzbeschichtung assoziiert ist, wobei der mehrdimensionale Paarungsbereich einen Paarungsbereich eines Farbtonabweichungsparameters, der mit dem nominalen Farbtonwinkel assoziiert ist, und einen zweidimensionalen Paarungsbereich einer Helligkeitsdifferenz und Sättigungsdifferenz, die mit dem nominalen Farbtonwinkel und mit dem nominalen Restfarbidentifikator assoziiert sind, umfasst;
- eine Validierungseinheit (270), die dazu eingerichtet ist, den Stapel dielektrischer Schichten der theoretischen Interferenzbeschichtung anzupassen, bis eine vorbestimmte Anzahl oder ein vorbestimmter Prozentsatz der Sammlung vorhersagbarer Interferenzbeschichtungen innerhalb des mehrdimensionalen Paarungsbereichs liegt, der mit dem nominalen Restfarbidentifikator der theoretischen Interferenzbeschichtung assoziiert ist;
- eine Abscheidungseinheit (280) zum Abscheiden eines Stapels dielektrischer Schichten gemäß der theoretischen Interferenzbeschichtung auf einem optischen Basiselement (14).

14. System nach Anspruch 13, wobei:
bei Schritt b) der nominale Restfarbidentifikator der theoretischen Interferenzbeschichtung auf den kolorimetrischen Koordinaten L*, a* und b* aus dem CIELab-Farbraum und wenigstens einem von einem Chroma-Wert C*ᵤᵥ, einem Sättigungswert S*ᵤᵥ und einem Paar kolorimetrischer Koordinaten u* und v* aus dem CIELUV-Farbraum basiert; und
bei Schritt d) der vorhersagbare Restfarbidentifikator jeder vorhersagbaren Interferenzbeschichtung auf den kolorimetrischen Koordinaten L*, a* und b* aus dem CIELab-Farbraum und wenigstens einem von einem Chroma-Wert C*ᵤᵥ oder einem Sättigungswert S*ᵤᵥ oder einem Paar kolorimetrischer Koordinaten u* und v* aus dem CIELUV-Farbraum basiert;
und
bei Schritt e) die Differenz der Restreflexionsfarbe zwischen jeder vorhersagbaren Interferenzbeschichtung und der theoretischen Interferenzbeschichtung einen Farbtonabweichungsparameter ΔH*, der von den kolorimetrischen Koordinaten a* und b* in dem CIELab-Farbraum abgeleitet wird, und Abstufungen von Farbtonparametern umfasst, die eine Helligkeitsdifferenz ΔL* von den kolorimetrischen Koordinaten im CIELab-Farbraum und eine Sättigungsdifferenz ΔS* von den kolorimetrischen Koordinaten im CIELUV-Farbraum jeder vorhersagbaren Interferenzbeschichtung und der theoretischen Interferenzbeschichtung umfassen.

15. System nach Anspruch 14, wobei der Farbtonabweichungsparameter ΔH* zwischen jeder vorhersagbaren Interferenzbeschichtung und der theoretischen Interferenzbeschichtung gleich $Δ H * = \frac{Δ h}{\left|Δh\right|} Δ {H}_{ab}$ ist, wobei ΔH = h₁ - h₂ eine Differenz zwischen einem Farbtonwinkel h1 der vorhersagbaren Interferenzbeschichtung und einem Farbtonwinkel h2 der theoretischen Interferenzbeschichtung ist und $Δ {H}_{ab} = \sqrt{{\left({a}_{1}-{a}_{2}\right)}^{2} + {\left({b}_{1}-{b}_{2}\right)}^{2} - {\left({C}_{1}-{C}_{2}\right)}^{2}}$, wobei a₁, b₁ die kolorimetrischen Koordinaten und C₁ die Chroma ${C}_{1} = \sqrt{\left({{a}_{1}}^{2}+{{b}_{1}}^{2}\right)}$ der vorhersagbaren Interferenzbeschichtung im CIELab-Farbraum sind bzw. a₂, b₂ die kolorimetrischen Koordinaten und C₂ die Chroma ${C}_{2} = \sqrt{\left({{a}_{2}}^{2}+{{b}_{2}}^{2}\right)}$ der theoretischen Interferenzbeschichtung im CIELab-Farbraum sind.

## Revendications

1. Système optique de transmission (1) comprenant un élément optique de base (14) ayant une première face (11) conçue pour recevoir des lumières optiques incidentes (10) et une deuxième face (12) par laquelle sortent les lumières optiques transmises (30), le système optique de transmission comportant un revêtement interférentiel (13) sur la première face (11) offrant au système optique de transmission un facteur moyen de réflexion de la lumière visible Rv inférieur ou égal à 2,5 %, ledit système optique de transmission présentant, par réflexion sur ladite première face (11), une couleur de reflet résiduelle , le système optique de transmission étant **caractérisé en ce qu'**il comprend un identifiant de couleur résiduelle pour déterminer ladite couleur de reflet résiduelle , l'identifiant de couleur résiduelle étant basé en partie sur les coordonnées colorimétriques du système optique de transmission dans l'espace colorimétrique CIELab et en partie sur les coordonnées colorimétriques du système optique de transmission dans l'espace colorimétrique CIELUV.

2. Système optique de transmission selon la revendication 1, dans lequel l'identifiant de couleur résiduelle est basé sur des coordonnées colorimétriques L*, a* et b* provenant de l'espace colorimétrique CIELab et sur au moins l'une d'une valeur de chroma C*ᵤᵥ, d'une valeur de saturation S*ᵤᵥ et d'une paire de coordonnées colorimétriques u* et v* provenant de l'espace colorimétrique CIELUV.

3. Appareil d'évaluation d'une différence de couleur de reflet couleur de reflet résiduelle entre un premier système optique de transmission et un deuxième système optique de transmission, dans lequel chacun des premier et deuxième systèmes optiques de transmission comprend un élément de base optique (14) ayant une première face (11) conçue pour recevoir des lumières optiques incidentes (10) et une deuxième face (12) par laquelle sortent les lumières optiques transmises (30), chacun des premier et deuxième systèmes optiques de transmission comportant un revêtement interférentiel (13) sur la première face (11) fournissant au premier, respectivement au deuxième, système optique de transmission un facteur moyen de réflexion de la lumière visible Rv inférieur ou égal à 2,5 %, chacun des premier et deuxième systèmes optiques de transmission présentant, par réflexion sur ladite première face (11), une couleur de reflet résiduelle , ledit appareil étant **caractérisé en ce qu'**il comprend :
- un système d'identification (110) conçu pour lire ou déterminer un identifiant de couleur résiduelle du premier système optique de transmission, et respectivement du deuxième système optique de transmission, l'identifiant de couleur résiduelle du premier système optique de transmission étant basé en partie sur les coordonnées colorimétriques du premier système optique de transmission dans l'espace colorimétrique CIELab et en partie sur les coordonnées colorimétriques du premier système optique de transmission dans l'espace colorimétrique CIELUV, et l'identifiant de couleur résiduelle du deuxième système optique de transmission étant basé en partie sur les coordonnées colorimétriques du deuxième système optique de transmission dans l'espace colorimétrique CIELab et en partie sur les coordonnées colorimétriques du deuxième système optique de transmission dans l'espace colorimétrique CIELUV ;
- une unité d'association (120) conçue pour déterminer une différence de couleur de reflet résiduelle entre le premier système optique de transmission et le deuxième système optique de transmission, ladite différence de couleur de reflet résiduelle étant basée sur une comparaison entre l'identifiant de couleur résiduelle du premier système optique de transmission et l'identifiant de couleur résiduelle du deuxième système optique de transmission.

4. Appareil selon la revendication 3, dans lequel l'unité d'association (120) est conçue pour déterminer si la différence de couleur de reflet résiduelle est comprise dans une plage d'association multidimensionnelle prédéterminée.

5. Appareil selon la revendication 3 ou la revendication 4, dans lequel ladite différence de couleur de reflet résiduelle comprend un ensemble de paramètres comprenant un paramètre d'écart de teinte ΔH* dérivé des coordonnées colorimétriques a* et b* dans l'espace colorimétrique CIELab et des nuances de paramètres de teinte comprenant une différence de clarté ΔL* à partir des coordonnées colorimétriques dans l'espace colorimétrique CIELab et une différence de saturation ΔS* à partir des coordonnées colorimétriques dans l'espace colorimétrique CIELUV.

6. Appareil selon les revendications 4 et 5, dans lequel l'unité d'association (120) est conçue pour déterminer si le paramètre d'écart de teinte ΔH* est compris dans une plage d'association prédéterminée d'écart de teinte (ΔH*ₘᵢₙ, ΔH*ₘₐₓ), et où l'unité d'association est conçue pour déterminer si la différence de clarté ΔL* et la différence de saturation ΔS* sont comprises dans une plage d'association bidimensionnelle prédéterminée de différence de clarté et de différence de saturation.

7. Appareil selon la revendication 6, dans lequel la plage prédéterminée d'association de l'écart de teinte (ΔH*ₘᵢₙ, ΔH*ₘₐₓ) dépend de la valeur de l'angle de teinte, et dans lequel la plage prédéterminée d'association bidimensionnelle de différence de clarté et de différence de saturation dépend de la valeur de l'angle de teinte.

8. Appareil selon l'une quelconque des revendications 5 à 7, dans lequel le paramètre d'écart de teinte ΔH* du premier système optique de transmission par rapport au deuxième système optique de transmission est égal à $Δ {H}^{∗} = \frac{Δ h}{\left|Δh\right|} Δ {H}_{ab}$ où ΔH = h₁ - h₂ est une différence entre un angle de teinte h1 du premier système optique de transmission et un angle de teinte h2 du deuxième système optique de transmission et $Δ {H}_{ab} = \sqrt{{\left({a}_{1}-{a}_{2}\right)}^{2} + {\left({b}_{1}-{b}_{2}\right)}^{2} - {\left({C}_{1}-{C}_{2}\right)}^{2}}$ où a₁, b₁ sont les coordonnées colorimétriques et C₁ la chroma ${C}_{1} = \sqrt{\left({{a}_{1}}^{2}+{{b}_{1}}^{2}\right)}$ du premier système optique de transmission dans l'espace colorimétrique CIELab et, respectivement a₂, b₂ sont les coordonnées colorimétriques et C₂ la chroma ${C}_{2} = \sqrt{\left({{a}_{2}}^{2}+{{b}_{2}}^{2}\right)}$ du deuxième système optique de transmission dans l'espace colorimétrique CIELab.

9. Appareil selon l'une quelconque des revendications 5 à 8, dans lequel la plage d'association multidimensionnelle est déterminée par apprentissage automatique (140) impliquant comme données d'entrée un examen visuel d'un ensemble de systèmes optiques de transmission à comparer à un système optique de référence ayant une couleur de reflet résiduelle cible et comme données de sortie une validation ou une invalidation d'une association du système optique de référence avec l'un quelconque des systèmes optiques de transmission de l'ensemble.

10. Appareil selon l'une quelconque des revendications 6 à 9, l'appareil comportant une base de données (130) d'identifiants de couleurs résiduelles de systèmes optiques de transmission, l'appareil étant conçu pour sélectionner dans ladite base de données (130) un couple de deux systèmes de transmission optique ayant une différence de couleur de reflet résiduelle où le paramètre d'écart de teinte ΔH* est compris dans une plage d'association prédéterminée d'écart de teinte (ΔH*ₘᵢₙ, ΔH*ₘₐₓ) et où la différence de clarté ΔL* et la différence de saturation ΔS* sont comprises dans une plage d'association bidimensionnelle prédéterminée de différence de clarté et de différence de saturation.

11. Appareil selon l'une quelconque des revendications 3 à 10, comprenant un module de tri (150) conçu pour classer des paires de deux systèmes de transmission optique dans des plages d'association déterminées en fonction de la valeur de l'angle de teinte et/ou en fonction de la différence de couleur de reflet résiduelle entre les deux systèmes de transmission optique de chaque paire.

12. Appareil selon l'une quelconque des revendications 3 à 11, dans lequel le système d'identification (110) comprend :
i. une unité de retrait (111) conçue pour retirer au moins partiellement une zone d'une couche externe protectrice formée sur le revêtement interférentiel (13) et pour définir une zone du revêtement interférentiel exempte de ladite couche externe protectrice ;
ii. une unité de mesure (112) conçue pour fournir une mesure et/ou un calcul à partir de la zone du revêtement interférentiel dépourvue de ladite couche externe de protection, ladite mesure et/ou le calcul comprenant des coordonnées colorimétriques L*, a* et b* dans le système colorimétrique CIELab et au moins l'une parmi une valeur de chroma C*ᵤᵥ ou une valeur de saturation S*ᵤᵥ, ou une paire de coordonnées colorimétriques u* et v* dans le système colorimétrique CIELUV ;
iii. une unité d'identification (113) conçue pour créer l'identifiant de couleur résiduelle à partir de la mesure et/ou du calcul mis en œuvre par l'unité de mesure.

13. Système pour la fabrication d'un système optique de transmission comportant un élément optique de base (14) et un revêtement interférentiel (13) sur au moins une face de l'élément de base, le revêtement interférentiel (13) assurant au système optique de transmission un facteur moyen de réflexion de lumière visible Rv inférieur ou égal à 2,5 %, ledit système optique de transmission présentant par réflexion sur ladite face une couleur prédéterminée de reflet résiduelle, où le système comprend :
- un système informatique (201) comprenant un logiciel de conception optique conçu pour :
a) définir un revêtement interférentiel théorique comprenant un empilement de couches diélectriques, ledit revêtement interférentiel théorique ayant un facteur moyen de réflexion de lumière visible Rv inférieur ou égal à 2,5 % ;
b) calculer un angle de teinte nominal dans l'espace colorimétrique CIELab et un identifiant de couleur résiduelle nominal basé, en partie, sur les coordonnées colorimétriques dans l'espace colorimétrique CIELab et en partie sur les coordonnées colorimétriques dans l'espace colorimétrique CIELUV du revêtement interférentiel théorique ;
c) définir des plages de variations de fabrication dans l'empilement de couches diélectriques de manière à former un ensemble de revêtements interférentiels prévisibles ;
d) pour chaque revêtement interférentiel prévisible de l'ensemble, calculer un angle de teinte prévisible dans l'espace colorimétrique CIELab et un identifiant de couleur résiduelle prévisible basé en partie sur les coordonnées colorimétriques dans l'espace colorimétrique CIELab et en partie sur les coordonnées colorimétriques dans l'espace colorimétrique CIELUV ;
e) pour chaque revêtement interférentiel prévisible de l'ensemble, calculer une différence de couleur de reflet résiduelle entre le revêtement interférentiel prévisible et le revêtement interférentiel théorique sur la base de l'identifiant de couleur de reflet résiduelle prévisible du revêtement interférentiel prévisible et de l'identifiant de couleur résiduelle nominal du revêtement interférentiel théorique ;
f) utiliser une base de données d'association stockant des plages d'association multidimensionnelles prédéterminées en fonction d'angles de teinte prédéterminés pour valider ou invalider si chaque revêtement interférentiel prévisible de l'ensemble présente avec le revêtement interférentiel théorique une différence de couleur de reflet résiduelle dans une plage d'association multidimensionnelle associée à l'identifiant de couleur résiduelle nominal du revêtement interférentiel théorique, ladite plage d'association multidimensionnelle comprenant une plage d'association d'un paramètre d'écart de teinte associé à l'angle de teinte nominal et une plage d'association bidimensionnelle de différence de clarté et de différence de saturation associée à l'angle de teinte nominal et audit identifiant de couleur résiduelle nominal ;
- une unité de validation (270) conçue pour ajuster l'empilement de couches diélectriques du revêtement interférentiel théorique jusqu'à ce qu'un nombre ou un pourcentage prédéterminé de l'ensemble de revêtements interférentiels prévisibles se situe dans la plage d'association multidimensionnelle associée à l'identifiant de couleur résiduelle nominal du revêtement interférentiel théorique ;
- une unité de dépôt (280) pour déposer sur un élément de base optique (14) un empilement de couches diélectriques selon le revêtement interférentiel théorique.

14. Système selon la revendication 13, dans lequel :
à l'étape b), l'identifiant de couleur résiduelle nominal du revêtement interférentiel théorique est basé sur les coordonnées colorimétriques L*, a* et b* de l'espace colorimétrique CIELab et au moins l'une parmi une valeur de chroma C*ᵤᵥ, une valeur de saturation S*ᵤᵥ et une paire de coordonnées colorimétriques u* et v* de l'espace colorimétrique CIELUV ; et
à l'étape d), l'identifiant de couleur résiduelle prévisible de chaque revêtement interférentiel prévisible est basé sur les coordonnées colorimétriques L*, a* et b* de l'espace colorimétrique CIELab et au moins l'une parmi une valeur de chroma C*ᵤᵥ, une valeur de saturation S*ᵤᵥ, ou une paire de coordonnées colorimétriques u* et v* de l'espace colorimétrique CIELUV ;
et
à l'étape e), la différence de couleur de reflet résiduelle entre chaque revêtement interférentiel prévisible et le revêtement interférentiel théorique comprend un paramètre d'écart de teinte ΔH* dérivé des coordonnées colorimétriques a* et b* dans l'espace colorimétrique CIELab et des nuances de paramètres de teinte comprenant une différence de clarté ΔL* par rapport aux coordonnées colorimétriques dans l'espace colorimétrique CIELab et une différence de saturation ΔS* par rapport aux coordonnées colorimétriques dans l'espace colorimétrique CIELUV de chaque revêtement interférentiel théorique.

15. Système selon la revendication 14, dans lequel le paramètre d'écart de teinte ΔH* entre chaque revêtement interférentiel prévisible et le revêtement interférentiel théorique est égal à $Δ {H}^{∗} = \frac{Δ h}{\left|Δh\right|} Δ {H}_{ab}$ où ΔH = h₁ - h₂ est une différence entre un angle de teinte h1 du revêtement interférentiel prévisible et un angle de teinte h2 du revêtement interférentiel théorique et $Δ {H}_{ab} = \sqrt{{\left({a}_{1}-{a}_{2}\right)}^{2} + {\left({b}_{1}-{b}_{2}\right)}^{2} - {\left({C}_{1}-{C}_{2}\right)}^{2}}$ où a₁, b₁ sont les coordonnées colorimétriques et C₁ la chroma ${C}_{1} = \sqrt{\left({{a}_{1}}^{2}+{{b}_{1}}^{2}\right)}$ du revêtement interférentiel prévisible dans l'espace colorimétrique CIELab, et respectivement a₂, b₂ sont les coordonnées colorimétriques et C₂ la chroma ${C}_{2} = \sqrt{\left({{a}_{2}}^{2}+{{b}_{2}}^{2}\right)}$ du revêtement interférentiel théorique dans l'espace colorimétrique CIELab.
